# EUROPEAN PATENT APPLICATION

(11) **EP 4 451 465 A1**
(43) Date of publication of application: **23.10.2024**
(21) Application number: 23740530.3
(22) Date of filing: 16.01.2023
(51) Int. Cl.: H01Q 1/38, H04B 1/401, H01Q 1/24, H04M 1/02

(54) **ELECTRONIC DEVICE COMPRISING ANTENNA**

(30) Priority: 17.01.2022 KR 20220006795; 04.03.2022 KR 20220028383
(71) Applicant: Samsung Electronics Co., Ltd, Suwon-si, Gyeonggi-do 16677 (KR)
(72) Inventor: KIM, Jiho, Suwon-si, Gyeonggi-do 16677 (KR); KIM, Gyusub, Suwon-si, Gyeonggi-do 16677 (KR); KIM, Kyungbin, Suwon-si, Gyeonggi-do 16677 (KR); KIM, Hyungjin, Suwon-si, Gyeonggi-do 16677 (KR); LEE, Jungkyu, Suwon-si, Gyeonggi-do 16677 (KR); KIM, Yoonjung, Suwon-si, Gyeonggi-do 16677 (KR); CHO, Bumjin, Suwon-si, Gyeonggi-do 16677 (KR)
(74) Representative: HGF
(86) International application number: PCT/KR2023/000737
(87) International publication number: WO 2023/136687

(57) **Abstract**

According to an example embodiment of the present disclosure, the electronic device may comprise: a housing including a front plate forming at least a part of the front surface of the electronic device, a rear plate forming at least a part of the rear surface of the electronic device, and a side member surrounding at least a part of the space between the front plate and the rear plate and forming at least a part of the side surfaces of the electronic device; a first support member positioned in the inner space of the housing and connected to the side member or extending from the side member; a display positioned between the first support member and the front plate and visually exposed through the front surface; a second support member comprising a non-conductive structure at least partially positioned in a first space within the space between the first support member and the rear plate, and a conductive structure positioned at least partially in a second space, within the space between the first support member and the rear plate, that does not overlap with the first space when viewed from above the rear plate, the conductive structure being connected to the non-conductive structure; a printed circuit board positioned at least partially between the first support member and the second support member; and a wireless communication circuit configured to transmit and/or receive signals of a selected or designated frequency band through the conductive structure.

## Description

### [Technical Field]

Embodiments of the present disclosure relates to an electronic device including an antenna.

### [Background Art]

With the development of wireless communication technology, electronic devices such as smartphones are widely used in daily life, and accordingly, the use of content is increasing. The electronic device may include a plurality of antennas to support a variety of communication technologies.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

With the broadening range of usable applications, the number of antennas included in an electronic device is constantly increasing. As the electronic device is slimming down, it has become difficult to design an antenna for securing antenna radiation performance for the desired frequency band, or securing coverage (a communication range) in a limited space, while reducing the electromagnetic effects with various elements in the electronic device.

Various embodiments of the present disclosure may provide an electronic device that includes an antenna for improving or securing antenna radiation performance, or for securing coverage.

Technical problems to be solved by the present disclosure are not limited to the above-mentioned technical problems, and other technical problems, which are not mentioned above, may be understood from the following descriptions by those skilled in the art to which the present disclosure pertains.

### [Solution to Problem]

According to an embodiment of the present disclosure, an electronic device may include a housing, a first support member, a display, a second support member, a printed circuit board, and a wireless communication circuit. The housing may include a front surface plate forming at least a portion of a front surface of the electronic device, a rear surface plate forming at least a portion of a rear surface of the electronic device, and a side member at least partially surrounding a space between the front surface plate and the rear surface plate and forming at least a portion of a side surface of the electronic device. The first support member is positioned in an inner space of the housing, and may be connected to the side member or extend from the side member. The display is positioned between the first support member and the front surface plate, and may be visually visible through the front surface of the electronic device. The second support member may include a non-conductive structure and a conductive structure. The non-conductive structure may be positioned at least partially in a first space of a space between the first support member and the rear surface plate. The conductive structure may be positioned at least partially in a second space of the space between the first support member and the rear surface plate that does not overlap the first space when viewed from above the rear surface plate, and may be connected to the non-conductive structure. The printed circuit board may be positioned at least partially between the first support member and the second support member. The wireless communication circuit may be constituted to transmit and/or receive a signal in a selected or designated frequency band through the conductive structure.

According to an example embodiment of the present disclosure, an electronic device may include a housing, a first support member, a display, a second support member, a printed circuit board, and a wireless communication circuit. The housing may include a front surface plate forming at least a portion of a front surface of the electronic device, a rear surface plate forming at least a portion of a rear surface of the electronic device, and a side member at least partially surrounding a space between the front surface plate and the rear surface plate and forming at least a portion of a side surface of the electronic device. The first support member is positioned in an inner space of the housing, and may be connected to the side member or extend from the side member. The display is positioned between the first support member and the front surface plate, and may be visually visible through the front surface of the electronic device. The second support member may include a non-conductive structure and a conductive structure. The non-conductive structure may be positioned at least partially in a first space of a space between the first support member and the rear surface plate. The conductive structure may be positioned at least partially in a second space of the space between the first support member and the rear surface plate that does not overlap the first space when viewed from above the rear surface plate, and may be connected to the non-conductive structure. The printed circuit board may be positioned at least partially between the first support member and the second support member. The wireless communication circuit may be constituted to transmit and/or receive a signal in a selected or specified frequency band through the conductive structure. The first support member may include a conductive area electrically connected to a ground plane included on the printed circuit board, and a non-conductive area connected to the conductive area. The conductive structure may be coupled to the first support member using a screw. A conductive boss including a female thread in correspondence to the screw is disposed in the non-conductive area, and the conductive boss may be separate from the conductive area.

### [Advantageous Effects of Invention]

An electronic device that includes an antenna according to various embodiments of the present disclosure may secure the antenna radiation performance, or coverage, while contributing to the slimming of the electronic device.

Other effects, which may be obtained or expected by the various embodiments of the present disclosure, will be directly or implicitly disclosed in the detailed description on the embodiments of the present disclosure.

### [Brief Description of Drawings]

FIG. 1 is a block diagram of an electronic device in a network environment, according to an embodiment.
FIG. 2 is a front perspective view of an electronic device according to an embodiment.
FIG. 3 is a rear perspective view of an electronic device according to an embodiment.
FIG. 4 is an exploded perspective view of an electronic device according to an embodiment.
FIG. 5 is an x-y top plan view of a front case according to an embodiment.
FIG. 6 is a perspective view of a second substrate assembly according to an embodiment.
FIG. 7 is an exploded perspective view of a second support member according to an embodiment.
FIG. 8 is a perspective view of an electronic device, in an embodiment.
FIG. 9 illustrates a cross-sectional structure taken along line A-A' in FIG. 8 in a y-z plane, in an embodiment.
FIG. 10 illustrates a cross-sectional structure taken along line B-B' in a y-z plane in FIG. 8, in an embodiment.
FIG. 11 is a graph illustrating antenna performance for an antenna radiator that includes a conductive structure based on a spacing distance between a screw fastening portion implemented in the form of an island boss, for example, and a conductive area of a first support member.
FIG. 12 illustrates a cross-sectional structure in a y-z plane illustrating a conductive structure, a second printed circuit board, and a flexible conductive member, in an embodiment.
FIG. 13 illustrates a cross-sectional structure in a y-z plane illustrating a conductive structure, a second printed circuit board, a screw, and a conductive member, in an embodiment.
FIG. 14 is an x-y top plan view of a second support member, in various embodiments.
FIG. 15 is an x-y top plan view of the electronic device, in an embodiment.
FIG. 16 illustrates, for example, electric field distribution for a mode formed by a structure.
FIG. 17 is a graph illustrating antenna radiation performance according to an element value that a switching circuit acts on an antenna, for example.
FIG. 18 is a graph illustrating antenna radiation performance for an antenna included in an electronic device, for example.
FIG. 19 is a graph illustrating antenna radiation performance for an antenna included in an electronic device according to a comparative example, for example.
FIG. 20 is an x-y top plan view of an electronic device, in an embodiment.
FIG. 21 is a block diagram of an antenna included in an electronic device, in an embodiment.
FIG. 22 illustrates electric field distribution for a mode formed by a structure, for example.
FIG. 23 is a graph illustrating antenna radiation performance for an antenna in FIG. 21 and a graph illustrating a reflection coefficient for an antenna in FIG. 21, in an embodiment.

### [Mode for the Invention]

Hereinafter, various embodiments of the disclosure disclosed herein will be described with reference to the accompanying drawings.

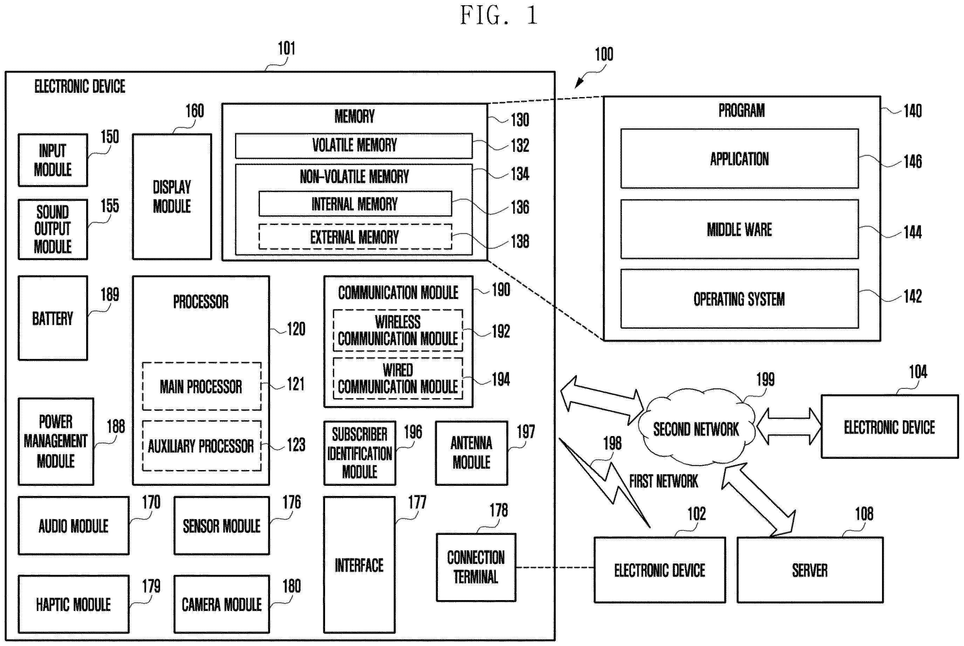

FIG. 1 is a block diagram of an electronic device 101 in a network environment 100 according to an embodiment.

Referring to Fig. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiments of the disclosure, at least one (e.g., the connection terminal 178) of the components may be omitted from the electronic device 101, or one or more other components may be added in the electronic device 101. In some embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultrareliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), fulldimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or clientserver computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

The term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

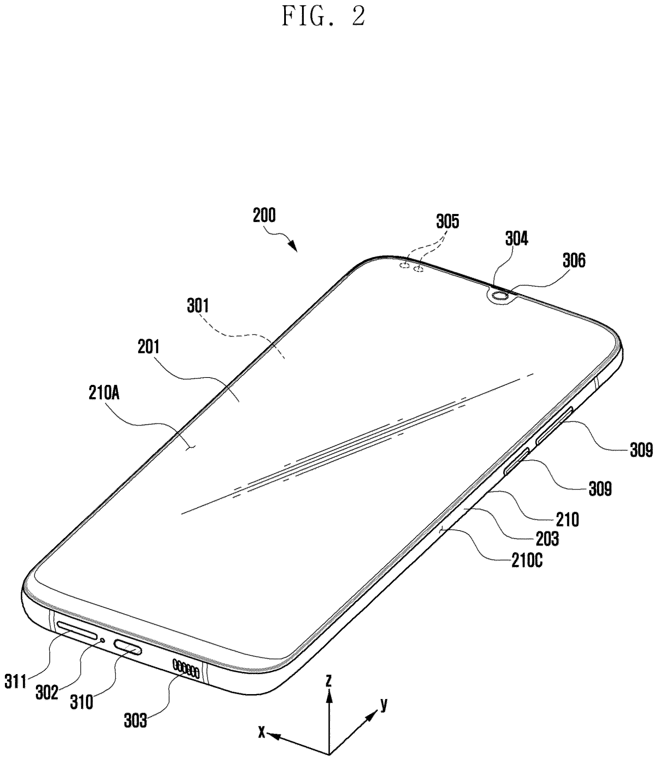

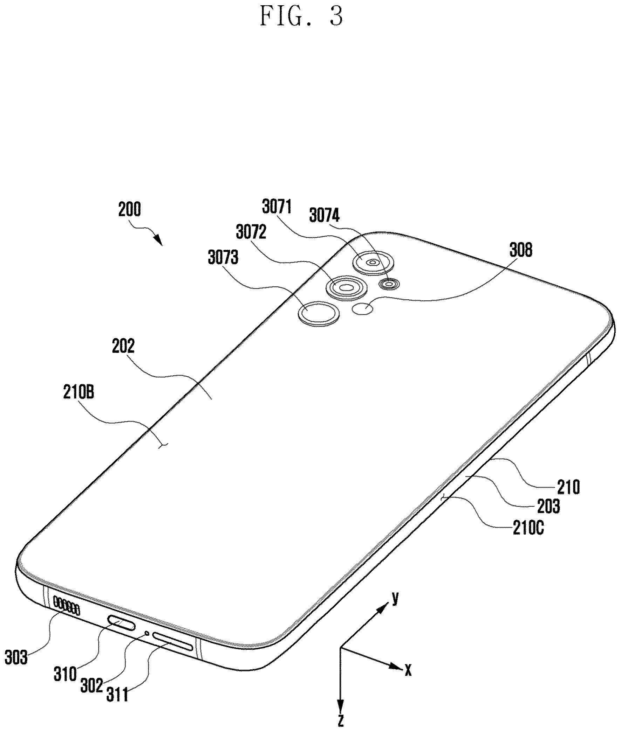

FIG. 2 is a front perspective view illustrating an electronic device 200 according to an embodiment. FIG. 3 is a rear perspective view of the electronic device 200 according to an embodiment.

In various embodiments of the present disclosure, for convenience of description, a direction in which a display 301 included in the electronic device 200 is visually exposed (e.g., in the direction of the +z axis) is defined as the front and an opposite direction (e.g., in the direction of the -z axis) as the rear.

With reference to FIGS. 2 and 3, the electronic device 200 (e.g., the electronic device 101 in FIG. 1) may include a housing 210. The housing 210 may provide, for example, a front surface 210A of the electronic device 200, a rear surface 210B of the electronic device 200, and a side surface 210C of the electronic device 200. In some embodiments, the housing 210 may refer to a structure including at least some of the front surface 210A, the rear surface 210B, and the side surface 210C. In an embodiment, the housing 210 may include a front surface plate (or a first plate) 201, a rear surface plate (or a second plate) 202, and a side member (or a side surface bezel structure) 203. The front surface 210A of the electronic device 200 may be provided with the front surface plate 201. The front surface plate 201 may be substantially transparent at least in a portion, and may include, for example, a glass plate including various coating layers, or a polymer plate. The rear surface 210B of the electronic device 200 may be provided with the rear surface plate 202. The rear surface plate 202 may be substantially opaque and may be formed, for example, of coated or tinted glass, ceramic, polymer, metal (e.g., aluminum, stainless steel (STS), or magnesium), or a combination of at least two of the above materials. The side member 203 may be coupled with the front surface plate 201 and the rear surface plate 202, and may form (or provide) the side surface 210C of the electronic device 200. The side member 203 may include a metal and/or a polymer.

According to an embodiment, the electronic device 200 may include at least one of the display 301, a first audio module 302, a second audio module 303, a third audio module 304, a sensor module 305, a front surface camera module 306, a plurality of rear surface camera modules (e.g., a first rear surface camera module 3071, a second rear surface camera module 3072, a third rear surface camera module 3073, and a fourth rear surface camera module 3074), a light emitting module 308, an input module 309, a first connection terminal module 310, or a second connection terminal module 311. In some embodiments, the electronic device 200 may omit at least one of the above constituent elements or may additionally include other constituent elements.

A display area (e.g., a screen display area or an active area) of the display 301 may be visually exposed, for example, through the front surface plate 201. In an embodiment, the electronic device 200 may be implemented such that the display area visible through the front surface plate 201 is as large as possible (e.g., large or full screen). For example, the display 301 may be implemented to have the substantially same outline shape as the outline shape of the front surface plate 201. In another example, a spacing between the outline of the display 301 and the outline of the front surface plate 201 may be formed substantially the same. In an embodiment, the display 301 may include a touch sensing circuit. In some embodiments, the display 301 may include a pressure sensor that is capable of measuring an intensity (pressure) of a touch. In some embodiments, the display 301 may be coupled to or positioned adjacent to a digitizer (e.g., an electromagnetic induction panel) that detects an electric pen (e.g., a stylus pen) with a magnetic field. In some embodiments, the display 301 may be implemented to include the digitizer.

The first audio module 302 may include, for example, a microphone positioned inside the electronic device 200, and a microphone hole provided in the side surface 210C of the electronic device 200 in correspondence to the microphone. The position or number of audio modules with respect to the microphone may vary, without being limited to the examples illustrated. In another example, the electronic device 200 may include a microphone hole formed in the rear surface 210B of the electronic device 200 and a microphone positioned inside the electronic device 200 in correspondence to the microphone hole. In some embodiments, the electronic device 200 may include a plurality of microphones utilized to detect a direction of sound.

The second audio module 303 may include, for example, a first speaker positioned inside the electronic device 200, and a first speaker hole provided in the side surface 210C of the electronic device 200 in correspondence to the first speaker. The third audio module 304 may include, for example, a second speaker positioned inside the electronic device 200, and a second speaker hole provided in the front surface 210A of the electronic device 200 in correspondence to the second speaker. In an embodiment, the second speaker may include a receiver for phone calls, and the second speaker hole may be referred to as a receiver hole. The position or number of second audio modules 303 or third audio modules 304 may vary, without limitation to the examples illustrated. In some embodiments, the microphone hole and the speaker hole may be implemented as a single hole. In some embodiments, the second audio module 303 or the third audio module 304 may include a piezo speaker with the speaker hole omitted.

The sensor module 305 may generate an electrical signal or a data value that corresponds to, for example, an internal operational state of the electronic device 200, or an external environmental state. In an embodiment, the sensor module 305 may include an optical sensor positioned inside the electronic device 200 in correspondence to the front surface 210A of the electronic device 200. The optical sensor may include, for example, a proximity sensor or an illumination sensor. The optical sensor may be aligned with the opening provided in the display 301. External light may reach the optical sensor through the openings of the front surface plate 201 and the display 301. In some embodiments, the optical sensor may be positioned on a rear surface of the display 301 or below or beneath the display 301, and may perform an associated function without visually distinguishing (or exposing) the position of the optical sensor. In some embodiments, the optical sensor may be positioned in alignment with a recess provided in the rear surface of the display 301. The optical sensor may be positioned to overlap at least a portion of the screen (or the display area) and perform a sensing function without being visually exposed. In this case, some areas of the display 301 that are at least partially overlapped with the optical sensor may include different pixel structures and/or wiring structures compared to other areas. For example, some areas of the display 301 that are at least partially overlapped with the optical sensor may have a different pixel density compared to other areas. In some embodiments, some areas of the display 301 that at least partially overlap with the optical sensor may not have a plurality of pixels disposed thereon. In some embodiments, the electronic device 200 may include a biometric sensor (e.g., a fingerprint sensor) positioned on the rear surface of the display 301 or below or underneath the display 301. The biometric sensor may be implemented as an optical sensor, a capacitive sensor, or an ultrasonic sensor, and the position or number thereof may vary. The electronic device 200 may further include at least one of various other sensor modules, such as a gesture sensor, a gyro sensor, a barometric pressure sensor, a magnetic sensor, an acceleration sensor, a grip sensor, a color sensor, an infrared (IR) sensor, a temperature sensor, or a humidity sensor.

The front surface camera module 306 may be positioned inside the electronic device 200, for example, in correspondence to the front surface 210A of the electronic device 200. A plurality of rear surface camera modules 3071, 3072, 3073, and 3074 may be positioned inside the electronic device 200, for example, in correspondence to the rear surface 210B of the electronic device 200. The front surface camera module 306 and/or the rear surface camera module 3071, 3072, 3073, or 3074 may include one or a plurality of lenses, an image sensor, and/or an image signal processor. The position or number of camera modules may vary without being limited to the examples illustrated.

According to an embodiment, the display 301 may include an opening aligned with the front surface camera module 306. External light may reach the front surface camera module 306 through the openings on the front surface plate 201 and the display 301. The opening of the display 301 that is aligned or overlapped with the front surface camera module 306 may be provided in the form of a notch. In some embodiments, the opening of the display 301 aligned or overlapped with the front surface camera module 306 may be provided in the form of a hole. In some embodiments, the front surface camera module 306 may be positioned on the rear surface of the display 301 or below or beneath the display 301, and may perform an associated function (e.g., taking an image) without the position of the front surface camera module 306 being visually distinguished (or exposed). The front surface camera module 306 may include, for example, a hidden display rear surface camera (e.g., an under display camera (UDC)). In some embodiments, the front surface camera module 306 may be positioned in alignment with a recess provided in the rear surface of the display 301. The front surface camera module 306 may be disposed to overlap at least a portion of the screen (or the display area) to obtain an image of an external subject without being visually exposed to the outside. In this case, some areas of the display 301 that are at least partially overlapped with the front surface camera module 306 may include different pixel structures and/or wiring structures compared to other areas. For example, some areas of the display 301 that are at least partially overlapped with the front surface camera module 306 may have a different pixel density compared to other areas. A pixel structure and/or wiring structure disposed in some areas of the display 301 that are at least partially overlapped with the front surface camera module 306 may reduce the loss of light between the outside and the front surface camera module 306. In some embodiments, some areas of the display 301 that at least partially overlap the front surface camera module 306 may not have pixels disposed thereon. In some embodiments, the electronic device 200 may further include a light emitting module (e.g., a light source) positioned inside the electronic device 200 in correspondence to the front surface 210A of the electronic device 200. The light emitting module may, for example, provide status information on the electronic device 200 in the form of light. In some embodiments, the light emitting module may provide a light source that is in conjunction with an operation of the front surface camera module 306. The light emitting module may include, for example, an LED, an IR LED, or a xenon lamp.

According to an embodiment, the rear surface plate 202 may include a plurality of openings that correspond in a one-to-one manner with the plurality of rear surface camera modules 3071, 3072, 3073, and 3074 when viewed from the top of the rear surface plate 202 (e.g., when viewed in the +z axis direction). The plurality of rear surface camera modules 3071, 3072, 3073, and 3074 may be positioned to penetrate through the plurality of openings of the rear surface plate 202. In some embodiments, the rear surface plate 202 may be implemented to include substantially transparent light transmitting areas, replacing the plurality of openings corresponding to the plurality of rear surface camera modules 3071, 3072, 3073, and 3074. In an embodiment, the plurality of rear surface camera modules 3071, 3072, 3073, and 3074 may have different features (e.g., an angle of view) or functions, and may include, for example, dual cameras or triple cameras. The plurality of rear surface camera modules 3071, 3072, 3073, and 3074 may include a plurality of camera modules including lenses that have different angles of view, and the electronic device 200 may be implemented to change the angle of view of the camera modules that is performed in the electronic device 200, on the basis of a user's selection. The plurality of rear surface camera modules 3071, 3072, 3073, and 3074 may include at least one of a wide-angle camera, a telephoto camera, a color camera, a monochrome camera, or an infrared (IR) camera (e.g., a time of flight (TOF) camera, a structured light camera). In some embodiments, the IR camera may be operated as at least a portion of the sensor module.

According to an embodiment, the rear surface plate 202 may include an opening corresponding to the light emitting module 308, when viewed from the top of the rear surface plate 202. The light emitting module 308 may be positioned to penetrate through the opening of the rear surface plate 202. In some embodiments, the rear surface plate 202 may be implemented to include substantially transparent light transmitting areas that replace the opening corresponding to the light emitting module 308. The light emitting module 308 may include a light source (e.g., flash) for the plurality of rear surface camera modules 3071, 3072, 3073, and 3074. The light emitting module 308 may include, for example, an LED or a xenon lamp.

The input module 309 may include, for example, one or more key input devices. The one or more key input devices may be positioned in openings provided in the side surface 210C of the electronic device 200, for example. In some embodiments, the electronic device 200 may not include some or all of the key input devices, and the key input devices that are not included may be implemented as soft keys using the display 301. The position or number of the input modules 309 may vary, and in some embodiments, the input modules 309 may include at least one sensor module.

The first connection terminal module (e.g., a first connector module or a first interface terminal module) 310 may include, for example, a first connector hole provided in the side surface 210C of the electronic device 200 in correspondence to a first connector (or, a first interface terminal) positioned inside the electronic device 200 and the first connector. The electronic device 200 may transmit and/or receive power and/or data with an external electronic device electrically coupled to the first connector. In an embodiment, the first connector may include a universal serial bus (USB) connector or a high definition multimedia interface (HDMI) connector. In some embodiments, the electronic device 200 may further include another connection terminal module that includes an audio connector (e.g., a headphone connector or a headset connector). The second connection terminal module (e.g., a second connector module or a second interface terminal module) 311 may be for mounting an external storage medium (e.g., a SIM card or a memory card) to the electronic device 200. The second connection terminal module 311 may include, for example, the second connector (or the second interface terminal) positioned inside the electronic device 200, and a second connector hole provided in the side surface 210C of the electronic device 200 in correspondence to the second connector. The second connection terminal module 311 may include a cover that is positioned (e.g., snap-fitted) into the second connector hole to form a portion of the side surface 210C of the electronic device 200. In an embodiment, the second connection terminal module 311 may include a tray (or an adapter) (e.g., a SIM tray) for electrically or mechanically connecting an external storage medium to the second connector. The external storage medium may be disposed in the tray and inserted into the second connector hole, and the external storage medium may be electrically coupled to the second connector. In some embodiments, the tray may be coupled to the cover. The position or number of connection terminal modules may vary without being limited to the example illustrated.

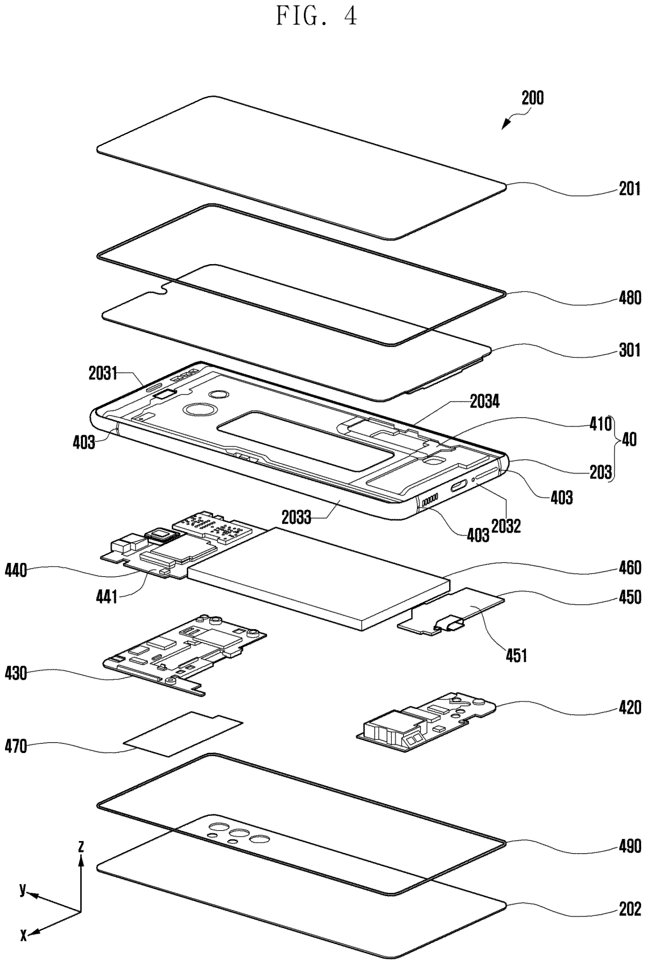

FIG. 4 is an exploded perspective view for the electronic device 200 according to an embodiment.

With reference to FIG. 4, in an embodiment, the electronic device 200 may include the front surface plate 201, the rear surface plate 202, the side member 203, a first support member 410, a second support member 420, a third support member 430, the display 301, a first substrate assembly 440, a second substrate assembly 450, a battery 460, an antenna structure 470, a first adhesive member 480 and/or a second adhesive member 490. In some embodiments, the electronic device 200 may omit some of the above constituent elements or may additionally include other constituent elements.

According to an embodiment, the side member 203 may include a first side surface portion (or first bezel portion) 2031, a second side surface portion (or second bezel portion) 2032, a third side surface portion (or third bezel portion) 2033, and/or a fourth side surface portion (or fourth bezel portion) 2034. When viewed from the top of the front surface plate 201 (e.g., in the -z axis direction), the first side surface portion 2031 and the second side surface portion 2032 may be spaced apart from each other in a first direction (e.g., in the y axis direction) and may be substantially parallel. The first side surface portion 2031 may provide a first side surface corresponding to the +y axis direction of the electronic device 200 in the side surface 210C, and the second side surface portion 2032 may provide a second side surface corresponding to the -y axis direction of the electronic device 200 in the side surface 210C. The third side surface portion 2033 may connect one end of the first side surface portion 2031 and one end of the second side surface portion 2032. The fourth side surface portion 2034 may connect the other end of the first side surface portion 2031 and the other end of the second side surface portion 2032. When viewed from the top of the front surface plate 201, the third side surface portion 2033 and the fourth side surface portion 2034 may be spaced from each other in a second direction perpendicular to the first direction (e.g., in the x-axis direction), and may be substantially parallel. The third side surface portion 2033 may provide a third side surface corresponding to the +x axis direction of the electronic device 200 in the side surface 210C, and the fourth side surface portion 2034 may provide a fourth side surface corresponding to the -x axis direction of the electronic device 200 in the side surface 210C. A corner where the first side surface portion 2031 and the third side surface portion 2033 are connected, a corner where the first side surface portion 2031 and the fourth side surface portion 2034 are connected, a corner where the second side surface portion 2032 and the third side surface portion 2033 are connected, and/or a corner where the second side surface portion 2032 and the fourth side surface portion 2034 are connected may be implemented as a smooth curved shape.

According to an embodiment, the side member 203 may include a plurality of insulating portions 403, and a plurality of conductive portions separate from each other by the plurality of insulating portions 403. The side surface 210C (see FIG. 2) of the electronic device 200 may be provided by the plurality of conductive portions and the plurality of insulating portions 403. The side surface 210C may include a first area provided by the plurality of conductive portions included in the side member 203. The side surface 210C may include a second area provided by the plurality of insulating portions 403 included in the side member 203. The first area and the second area of the side surface 210C may be smoothly connected with no substantial height difference.

According to an embodiment, the first support member 410 may be positioned inside the electronic device 200 and connected to the side member 203, or may be integrally formed with the side member 203. The first support member 410 may be formed, for example, of a metallic material and/or a non-metallic material (e.g., a polymer).

The first support member 410 and the side member 203 may be referred to as a "front case" 40. Electronic components, such as the display 301, the first substrate assembly 440, the second substrate assembly 450, or the battery 460, or various members associated with the electronic components, may be disposed in the front case 40 or the first support member 410, or supported by the front case 40 or the first support member 410. The front case 40 or first support member 410 may be included in the electronic device 200 to withstand loads, which may contribute to the durability or stiffness (e.g., torsional stiffness) of the electronic device 200. In some embodiments, the front case 40 or the first support member 410 may be referred to by various other terms, such as "first frame," "first frame structure," or "first framework. The first support member 410 is an internal structure positioned in an internal space of the electronic device 200, and in some embodiments may be referred to by various other terms, such as "bracket," "first support," or "first support structure. In some embodiments, the first support member 410 may be interpreted as a portion of the housing 210 (see FIG. 2).

According to the embodiment, at least one conductive portion included in the first support member 410 may serve to block electromagnetism from the display 301, the first substrate assembly 440, and/or the second substrate assembly 450.

The display 301, for example, may be positioned between the first support member 410 and the front surface plate 201, and may be disposed on a surface of the first support member 410 that faces the front surface plate 201. In an embodiment, the display 301 may be coupled to the front surface plate 201 using an optical transparent adhesive member such as optical clear resin (OCA), optical clear resin (OCR), or super view resin (SVR). The first substrate assembly 440 and the second substrate assembly 450, for example, may be positioned between the first support member 410 and the rear surface plate 202, and may be disposed on a surface of the first support member 410 that faces the rear surface plate 202. For example, the battery 460 may be positioned between the first support member 410 and the rear surface plate 202 and disposed on the first support member 410.

According to an embodiment, the first substrate assembly 440 may include a first printed circuit board 441 (e.g., a printed circuit board (PCB), or a printed circuit board assembly (PBA)). The first substrate assembly 440 may include various electronic components electrically connected to the first printed circuit board 441. The electronic components may be disposed on the first printed circuit board 441 or electrically connected to the first printed circuit board 441 via an electrical path, such as a cable or a flexible printed circuit board (FPCB). With reference to FIGS. 2 and 3, the electronic components may include, for example, a second speaker included in the third audio module 304, the sensor module 305, the front surface camera module 306, the plurality of rear surface camera modules 3071, 3072, 3073, and 3074, the light emitting module 308, or the input module 309.

According to the embodiment, when viewed from above the front surface plate 201 (e.g., when viewed in the -z-axis direction), the second substrate assembly 450 may be disposed to be spaced apart from the first substrate assembly 440 with the battery 460 interposed therebetween. The second substrate assembly 450 may include a second printed circuit board 451 electrically connected to the first printed circuit board 441 of the first substrate assembly 440. The second substrate assembly 450 may include various electronic components electrically connected to the second printed circuit board 451. The electronic components may be disposed on the second printed circuit board 451 or electrically connected to the second printed circuit board 451 via an electrical path, such as a cable or a FPCB. With reference to FIGS. 2 and 3, the electronic components may include, for example, the microphone included in the first audio module 302, a first speaker included in the second audio module 303, the first connector included in the first connection terminal module 310, or the second connector included in the second connection terminal module 311.

According to some embodiments, the first substrate assembly 440 or the second substrate assembly 450 may include a primary PCB (or main PCB or master PCB), a secondary PCB (or, slave PCB) disposed to partially overlap the primary PCB, and/or an interposer substrate between the primary PCB and the secondary PCB.

The battery 460 is a device for powering at least one constituent element of the electronic device 200 and may include, for example, a non-rechargeable primary cell, a rechargeable secondary cell, or a fuel cell. The battery 460 may be integrally disposed within the electronic device 200. In some embodiments, the battery 460 may be detachably attached to the electronic device 200.

According to an embodiment, the third support member 430 may be positioned between the first support member 410 and the rear surface plate 202, and may be coupled to the first support member 410 and/or the first substrate assembly 440 using fastening elements such as screws (or bolts). At least a portion of the first substrate assembly 440 may be positioned between the first support member 410 and the third support member 430, and the third support member 430 may cover and protect the first substrate assembly 440. The second support member 420, when viewed from the top of the rear surface plate 202 (e.g., when viewed in the +z axis direction), may be positioned at least partially spaced apart from the third support member 430 with the battery 460 interposed therebetween. The second support member 420 may be positioned between the first support member 410 and the rear surface plate 202 and coupled to the first support member 410 and/or the second substrate assembly 450 by using a fastening element such as a screw (or a bolt). At least a portion of the second substrate assembly 450 may be positioned between the first support member 410 and the second support member 420, and the second support member 420 may cover and protect the second substrate assembly 450. The second support member 420 and/or the third support member 430 may be formed of a metallic material and/or a non-metallic material (e.g., polymer). In some embodiments, the third support member 430 may serve to block electromagnetism from the first substrate assembly 440, and the second support member 420 may serve to block electromagnetism from the second substrate assembly 450. In some embodiments, the second support member 420 and/or the third support member 430 may be referred to as a "rear case". In some embodiments, the second support member 420 may be referred to as various other terms, such as "second support" or "second support structure," and the third support member 430 may be referred to as various other terms, such as "third support" or "third support structure. In some embodiments, the second support member 420 and/or the third support ember 430 may be interpreted as a portion of the housing 210 (see FIG. 2).

According to an embodiment, at least one conductive portion included in or disposed on the second support member 420 may operate as an antenna radiator electrically connected to a communication circuit included in the first substrate assembly 440 or the second substrate assembly 450 (e.g., the wireless communication module 192 in FIG. 1).

According to an embodiment, at least one conductive portion included in or disposed on the third support member 430 may operate as an antenna radiator electrically connected to a communication circuit included in the first substrate assembly 440 or the second substrate assembly 450 (e.g., the wireless communication module 192 of FIG. 1).

According to some embodiments, an integrated substrate assembly including the first substrate assembly 440 and the second substrate assembly 450 may be implemented. For example, when viewed from the top of the rear surface plate 202 (e.g., when viewed in the +z axis direction), the substrate assembly may include a first portion and a second portion spaced apart from each other with the battery 460 interposed therebetween, and a third portion extending between the battery 460 and the side member 203 and connecting the first portion and the second portion. The third portion may be implemented to be substantially rigidly. In some embodiments, the third portion may be implemented to be substantially flexible. In some embodiments, an integrated support member may be implemented, including the second support member 420 and the third support member 430.

According to an embodiment, the antenna structure 470 may be positioned between the third support member 430 and the rear surface plate 202. In some embodiments, the antenna structure 470 may be positioned between the battery 460 and the rear surface plate 202. The position of the antenna structure 470 may vary, including but not limited to the above. The antenna structure 470 may be implemented in the form of a film, such as an FPCB, for example. The antenna structure 470 may include at least one conductive pattern used as a looped radiator. For example, the at least one conductive pattern may include a spiral conductive pattern in a flat form (e.g., a flat coil, or a pattern coil). In an embodiment, the at least one conductive pattern included in the antenna structure 470 may be electrically connected to a communication circuit (or a wireless communication circuit) included in the first substrate assembly 440 (e.g., the wireless communication module 192 in FIG. 1). For example, at least one conductive pattern may be used for short range wireless communication such as near field communication (NFC). In another example, at least one conductive pattern may be used in magnetic secure transmission (MST) to transmit and/or receive magnetic signals. In some embodiments, at least one conductive pattern included in the antenna structure 470 may be electrically connected to a power transmission and reception circuit included in the first substrate assembly 440. The power transmission and reception circuit may wirelessly receive power from an external electronic device or wirelessly transmit power to the external electronic device using at least one conductive pattern. The power transmission and reception circuit may include a power management module, for example, a power management integrated circuit (PMIC), or a charger integrated circuit (IC). The power transmission and reception circuit may use power received wirelessly using the conductive pattern to charge the battery 460.

According to some embodiments, a processor (e.g., the processor 120 in FIG. 1) electrically connected to the wireless communication circuit (e.g., the wireless communication module 192 in FIG. 1) may use the antenna structure 470 to perform a location determination function (e.g., an angle of arrival (AOA)) for a signal source (e.g., a responder, transmitter, or transmitter (Tx) device). The processor may perform both location determination (AOA), which measures an angle, and location determination (ranging), which measures a distance. In an embodiment, the processor may identify (or estimate) a distance between the electronic device 200 and the signal source using at least one antenna element (e.g., a first antenna element, a second antenna element, and/or a third antenna element) included in the antenna structure 470. In an embodiment, the processor may identify or estimate an angle of reception (e.g., a direction of a signal) of a signal with respect to a configured axis of the electronic device 200 using at least one of a difference in arrival time of a response message to a request message via at least two antenna elements included in the antenna structure 470, a difference in a reaching distance between the received signals, or a phase difference. The electronic device 200 may use a bandwidth of a broadband (e.g., ultra-wide band (UWB)) to support the location determination function. The UWB may refer to a technology that enables communication with a bandwidth of a broadband, for example, a technology that follows the international standard of IEEE 802.15.4. In an embodiment, the processor may identify or estimate a position of the signal source (e.g., a responder, a transmitter, or a Tx device) for the electronic device 200 (e.g., an initiator, a receiver, or an Rx device) using a phase difference in the signals received through the plurality of antenna elements included in the antenna structure 470. The antenna structure 470 may be implemented as a printed circuit board (e.g., a flexible printed circuit board (FPCB)) and may be, for example, a patch antenna including a plurality of patches (e.g., the first antenna element, the second antenna element, and the third antenna element).

According to an embodiment, the first adhesive member 480 may be positioned between the front surface plate 201 and the first support member 410 , or between the front surface plate 201 and the side member 203. The front surface plate 201 may be coupled to the first support member 410 or the side member 203 using the first adhesive member 480. The first adhesive member 480 may be disposed in the shape of an annulus, for example, adjacent an edge (or a rim) of the front surface plate 201. The first adhesive member 480 may be disposed in various other shapes that are not limited to the examples illustrated. In some embodiments, the first adhesive member 480 may include a plurality of adhesive members separate from each other. In this case, there may be a separate adhesive member or fill member that connects the two separate adhesive members.

According to an embodiment, the second adhesive member 490 may be positioned between the rear surface plate 202 and the first support member 410 , or between the rear surface plate 202 and the side member 203. The rear surface plate 202 may be coupled to the first support member 410 or the side member 203 using the second adhesive member 490. The second adhesive member 490 may be disposed in the shape of an annulus, for example, adjacent an edge (or a rim) of the rear surface plate 202. The second adhesive member 490 may be disposed in various other shapes that are not limited to the examples illustrated. In some embodiments, the second adhesive member 490 may include a plurality of adhesive members separate from each other. In this case, there may be a separate adhesive member or fill member that connects the two separate adhesive members.

According to an embodiment, the first adhesive member 480 or the second adhesive member 490 may include, for example, a thermo-responsive adhesive material, a photo-responsive adhesive material, a conventional adhesive, or a double-sided tape.

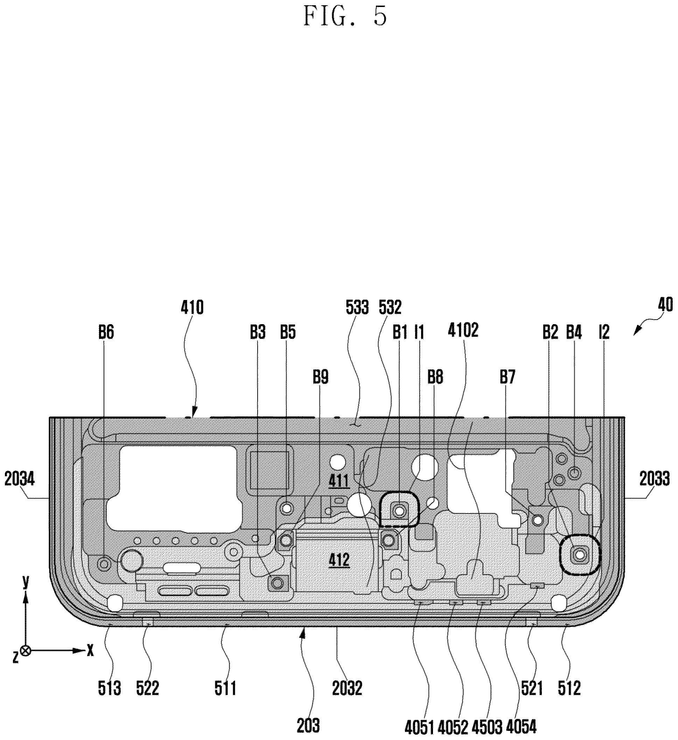

FIG. 5 is an x-y top plan view of the front case 40 according to an embodiment.

With reference to FIG. 5, the side member 203 of the front case 40 may include a first conductive portion 511, a second conductive portion 512, a third conductive portion 513, a first insulating portion 521, and/or a second insulating portion 522. The first conductive portion 511 may provide a portion of the second side surface portion 2032. The second conductive portion 512 may include a corner where the second side surface portion 2032 and the third side surface portion 2033 are connected, and may provide a portion of the second side surface portion 2032 and at least a portion of the third side surface portion 2033. The third conductive portion 513 may include a corner where the second side surface portion 2032 and the fourth side surface portion 2034 are connected, and may provide a portion of the second side surface portion 2032 and at least a portion of the fourth side surface portion 2034. The first insulating portion 521 is one insulating portion positioned between the first conductive portion 511 and the second conductive portion 512 of the plurality of insulating portions 403 in FIG. 4, and may provide a portion of the second side surface portion 2032. The second insulating portion 522 is one insulating portion positioned between the first conductive portion 511 and the third conductive portion 513 of the plurality of insulating portions 403 in FIG. 4, and may provide a portion of the second side surface portion 2032. The top plan view of FIG. 5 relates to a portion of the front case 40, and although not illustrated, the side member 203 may further include other conductive portions or insulating portions included in the first side surface portion 2031 (see FIG. 4), the third side surface portion 2033, or the fourth side surface portion 2034. The shape or number of conductive portions or insulating portions included in the side member 203 may be provided in a variety of ways. The plurality of conductive portions, including the first conductive portion 511, the second conductive portion 512, and the third conductive portion 513 of the side member 203, may include, for example, titanium, an amorphous alloy, a metal-ceramic composite material (e.g., cermet), or stainless steel. In some embodiments, the plurality of conductive portions including the first conductive portion 511, the second conductive portion 512, and the third conductive portion 513 of the side member 203 may include magnesium, a magnesium alloy, aluminum, an aluminum alloy, a zinc alloy, or a copper alloy. The plurality of conductive portions, including the first conductive portion 511, the second conductive portion 512, and the third conductive portion 513 of the side member 203, may include a variety of other metallic materials. The plurality of conductive portions, including the first conductive portion 511, the second conductive portion 512, and the third conductive portion 513 of the side member 203, may be referred to as various terms such as "side surface conductive structure," "side surface metal structure," "outer conductive structure," "outer metal structure," "first conductive structure," or "first metal structure" of the electronic device 200.

According to an embodiment, the first support member 410 of the front case 40 may include a conductive area 411 that includes a metallic material, and a non-conductive area 412 that is coupled to the conductive area 411 and includes a non-metallic material. The conductive area 411 may be connected to or integrally formed with at least a portion of a side surface conductive structure of the electronic device 200 (e.g., the plurality of conductive portions of the side member 203, including the first conductive portion 511, the second conductive portion 512, and the third conductive portion 513). The non-conductive area 412 may be connected to or formed integral with at least some of a plurality of insulating portions (e.g., the plurality of insulating portions 403 in FIG. 4) of the side member 203, including the first insulating portion 521 and the second insulating portion 522. The top plan view of FIG. 5 relates to a portion of the front case 40, and although not illustrated, the shape, position, or number of conductive areas 411 may vary. The top plan view of FIG. 5 relates to a portion of the front case 40, and although not illustrated, the front case 40 may further include at least one other non-conductive area separate from the non-conductive area 412, or the shape, position, or number of non-conductive areas 412 may vary. One or more conductive areas that include the conductive area 411 of the first support member 410 may be referred to as various terms, such as "inner conductive structure," "inner conductive structure," "inner metal structure," "second conductive structure," or "second metal structure" of the electronic device 200. One or more non-conductive areas that include the non-conductive area 412 of the first support member 410 may be referred to as various terms, such as "inner non-conductive structure," "inner non-conductive structure," or "inner polymer structure" of the electronic device 200. One or more conductive areas that include the conductive area 411 of the first support member 410 may include a metallic material (e.g., magnesium, a magnesium alloy, aluminum, an aluminum alloy, a zinc alloy, or a copper alloy) that is different from the side surface conductive structure of the electronic device 200, for example. In another example, one or more conductive areas that include the conductive area 411 of the first support member 410 may include a metallic material that is at least partially the same as the side surface conductive structure of the electronic device 200. One or more non-conductive areas that include the non-conductive area 412 of the first support member 410 may include various polymers, such as, for example, an engineering plastic (e.g., polycarbonate (PC) or polymethyl methacrylate (PMMA)). One or more non-conductive areas that include the non-conductive area 412 of the first support member 410 may include, for example, a polymer resin such as polyether ether ketone, polyphenylene sulfide, polybutylene terephthalate, polyimide, or polycarbonate. In some embodiments, one or more non-conductive areas that include the non-conductive area 412 of the first support member 410 may include a material (e.g., fiber reinforced plastic (FRP)) that is a blend of an engineering plastic with various reinforcement substrates, such as glass fibers or carbon fibers.

According to an embodiment, a plurality of insulating portions, including the first insulating portion 521 and the second insulating portion 522 of the side member 203 may be connected to one or more non-conductive areas that include the non-conductive area 412 of the first support member 410. In an embodiment, a plurality of insulating portions including the first insulating portion 521 and the second insulating portion 522 of the side member 203 may include the same non-metallic material as one or more non-conductive areas including the non-conductive area 412 of the first support member 410. In some embodiments, a plurality of insulating portions that include the first insulating portion 521 and the second insulating portion 522 of the side member 203 may include a non-metallic material that is different from one or more non-conductive areas that include the non-conductive area 412 of the first support member 410.

According to an embodiment, the first support member 410 may include a first support surface facing the front surface plate 201 in FIG. 4 (not illustrated), and a second support surface 4102 facing the rear surface plate 202 in FIG. 4. The first support surface or the second support surface 4102 may include, for example, a portion provided by the conductive area 411 and/or a portion provided by the non-conductive area 412. The display 301 in FIG. 4 (see FIG. 4) may be disposed on the first support surface. The first substrate assembly 440 (see FIG. 4), the second substrate assembly 450 (see FIG. 4), or the battery 460 may be disposed on the second support surface 4102.

According to an embodiment, the second support surface 4102 of the first support member 410 may include a first support area (or first area) (not illustrated) on which the first substrate assembly 440 (see FIG. 4) is disposed, a second support area (or second area) 532 on which the second substrate assembly 450 (see FIG. 4) is disposed, and a third support area (or third area) 533 on which the battery 460 (see FIG. 4) is disposed. When viewed from above the second support surface 4102 (e.g., when viewed in the +z axis direction), the third support area 533 may be positioned between the first support area and the second support area 532. When viewed from above the second support surface 4102, the first support area may be positioned between the first side surface portion 2031 of the side member 203 (see FIG. 4) and the third support area 533. When viewed from above the second support surface 4102, the second support area 532 may be positioned between the second side surface portion 2032 of the side member 203 and the third support area 533.

According to an embodiment, the first support area of the second support surface 4102 may include a first mounting structure that is capable of stably positioning the first substrate assembly 440 (see FIG. 4) on the first support member 410, and a screw fastening portion to support a screw fastening between the first support member 410 and/or the first substrate assembly 440 based on the first mounting structure. The first mounting structure may include, for example, a recess structure or a fitting structure that allows the first substrate assembly 440 to be firmly and stably positioned on the first support member 410. The screw fastening portion may be a boss including a female thread corresponding to a male thread of a screw. The screw fastening portions may be provided on the first mounting structure to support screw fastening between the first substrate assembly 440 and the first support member 410. In some embodiments, the first mounting structure may be defined or interpreted as including screw fastening portions. In some embodiments, the first mounting structure may further include a hook structure that supports a snap-fit fastening between the first substrate assembly 440 and the first support member 410. For example, when the first substrate assembly 440 is positioned on the first mounting structure, at least one hook structure formed on the first mounting structure may be fastened to at least one hook fastening structure (or catching structure) formed on the first substrate assembly 440. In some embodiments, the first substrate assembly 440 includes at least one hook structure, and the first mounting structure may include at least one hook fastening structure corresponding thereto.

According to an embodiment, the second support area 532 of the second support surface 4102 may include a second mounting structure that is capable of stably positioning the second substrate assembly 450 (see FIG. 4) on the first support member 410, and screw fastening portions to support screw fastening between the first support member 410 and/or the second substrate assembly 450 based on the second mounting structure. The second mounting structure may include, for example, a recess structure or a fitting structure that allows the second substrate assembly 450 to be firmly and stably positioned on the first support member 410. The screw fastening portions may be formed in the second mounting structure to support screw fastening between the second substrate assembly 450 and the first support member 410. In some embodiments, the second mounting structure may be defined or interpreted as including screw fastening portions. In some embodiments, the second mounting structure may further include a hook structure that supports a snap-fit fastening between the second substrate assembly 450 and the first support member 410. For example, when the second substrate assembly 450 is positioned on the second mounting structure, at least one hook structure formed on the second mounting structure may be fastened to at least one hook fastening structure (or catching structure) formed on the second substrate assembly 450. In some embodiments, the second substrate assembly 450 includes at least one hook structure, and the second mounting structure may include at least one hook fastening structure corresponding thereto.

According to an embodiment, the third support area 533 of the second support surface 4102 may include a third mounting structure that is capable of stably positioning the battery 460 (see FIG. 4) on the first support member 410. The third mounting structure may include a recess structure or a fitting structure that allows the battery 460 to be firmly and stably positioned on the first support member 410. The battery 460 may be disposed on the third mounting structure using mechanical coupling, such as screw fastening, or bonding that includes an adhesive material.

According to an embodiment, in the example illustrated, the non-conductive area 412 may be positioned closer to the second side surface portion 2032 than the first side surface portion 2031 (see FIG. 4), and may be connected to the first insulating portion 521 and the second insulating portion 522. The non-conductive area 412 may provide a portion of the second support area 532 included on the second support surface 4102.

According to an embodiment, the first support member 410 may include a first screw fastening portion B1, a second screw fastening portion B2, a third screw fastening portion B3, a fourth screw fastening portion B4, a fifth screw fastening portion B5, a sixth screw fastening portion B6, a seventh screw fastening portion B7, an eighth screw fastening portion B8, and/or a ninth screw fastening portion B9. In an embodiment, at least one screw fastening portion may be formed of a metallic material. The screw fastening portion of a metallic material may have rigidity, strength, and/or durability to secure a fastening force with a screw while preventing or reducing a breakage of the screw fastening portion due to a load applied to the screw fastening portion upon screw fastening. In some embodiments, at least one screw fastening portion may be formed of a non-metallic material that is capable of securing rigidity, such as an engineering plastic.

According to an embodiment, the first screw fastening portion B1, the second screw fastening portion B2, the third screw fastening portion B3, the fourth screw fastening portion B4, the fifth screw fastening portion B5, and the sixth screw fastening portion B6 may be used to screw fasten the second support member 420 (see FIG. 4) to the first support member 410. The seventh screw fastening portion B7, the eighth screw fastening portion B8, and the ninth screw fastening portion B9 may be used to screw fasten the second substrate assembly 450 (see FIG. 4) to the first support member 410.

According to an embodiment, the first screw fastening portion B1, the second screw fastening portion B2, the third screw fastening portion B3, the eighth screw fastening portion B8, and/or the ninth screw fastening portion B9 may be disposed in the non-conductive area 412 of the first support member 410. The first screw fastening portion B1, the second screw fastening portion B2, the third screw fastening portion B3, the eighth screw fastening portion B8, and/or the ninth screw fastening portion B9 may be positioned to be separate from the conductive area 411 of the first support member 410. The screw fastening portion that is separate from the conductive area 411 of the first support member 410 and disposed in the non-conductive area 412 of the first support member 410, such as the first screw fastening portion B 1, the second screw fastening portion B2, the third screw fastening portion B3, the eighth screw fastening portion B8, or the ninth screw fastening portion B9, may be referred to as an "island boss" or a "floating boss. The first screw fastening portion B 1, the second screw fastening portion B2, the third screw fastening portion B3, the eighth screw fastening portion B8, or the ninth screw fastening portion B9 may include the same metallic material as the conductive area 411 of the first support member 410. In some embodiments, the first screw fastening portion B 1, the second screw fastening portion B2, the third screw fastening portion B3, the eighth screw fastening portion B8, or the ninth screw fastening portion B9 may include a metallic material different from the conductive area 411 of the first support member 410. In some embodiments, the first screw fastening portion B1, the second screw fastening portion B2, the third screw fastening portion B3, the eighth screw fastening portion B8, or the ninth screw fastening portion B9 may be defined or interpreted as a portion of the conductive area 411 of the first support member 410. The conductive area 411 of the first support member 410 may be implemented to include the fourth screw fastening portion B4, the fifth screw fastening portion B5, the sixth screw fastening portion B6, and/or the seventh screw fastening portion B7.

According to an embodiment, the first support member 410 including the conductive area 411 and the non-conductive area 412 may be manufactured through an operation of forming a non-metallic structure coupled with a metallic structure using insert injection molding and an operation of contour machining. The metallic structure may be the basis of the conductive area 411, or may be the basis of a structure formed integrally with the conductive area 411 and a side surface conductive structure (e.g., a plurality of conductive portions including the first conductive portion 511, the second conductive portion 512, and the third conductive portion 513 of the side member 203). The non-metallic structure formed through insert injection molding may be the basis of the non-conductive area 412. The metal structure may include, for example, a first portion for the island bosses, such as the first screw fastening portion B1 , the second screw fastening portion B2, the third screw fastening portion B3, the eighth screw fastening portion B8, and/or the ninth screw fastening portion B9, and a remaining second portion. The first portion may have the form of a boss that includes a female thread corresponding to the screw fastening portion. In some embodiments, the first portion may be contour machined before or after insert injection molding to have the form of a boss that includes a female thread. When the first portion and the second portion are connected in the metallic structure, a connection portion between the first portion and the second portion may be removed before or after insert injection molding.

According to some embodiments, the first screw fastening portion B1, the second screw fastening portion B2, the third screw fastening portion B3, the eighth screw fastening portion B8, and/or the ninth screw fastening portion B9 may be disposed on the first support member 410 using an adhesive material and implemented as an island boss. There may be a variety of other ways to form an island boss.

According to an embodiment, the non-conductive area 412 of the first support member 410 may include a first insulating area I1 (or first insulating portion) disposed at least partially between the first screw fastening portion B1 in the form of an island boss and the conductive area 411 of the first support member 410 (e.g., a portion of the first support member 410 included in the ground of the electronic device 200). The first insulating area I1 may insulate or physically separate the first screw fastening portion B1 and the conductive area 411 of the first support member 410. The first screw fastening portion B1 is disposed in the first insulating area I1 , and the first insulating area I1 may surround at least a portion of the first screw fastening portion B1 so as not to interfere with screw fastening for the first screw fastening portion B1. When viewed from above the second support area 532 (e.g., when viewed in the +z axis direction), a distance at which the first screw fastening portion B 1 is spaced apart from the conductive area 411 of the first support member 410 may be defined or interpreted as a distance between a first edge included in the first screw fastening portion B1 and a second edge of the conductive area 411 of the first support member 410 that at least partially surrounds the first edge.

According to an embodiment, the non-conductive area 412 of the first support member 410 may include a second insulating area I2 (or second insulating portion) disposed at least partially between the second screw fastening portion B2 in the form of an island boss and the conductive area 411 of the first support member 410 (e.g., a portion of the first support member 410 included in the ground of the electronic device 200). The second insulating area I2 may insulate or physically separate the second screw fastening portion B2 and the conductive area 411 of the first support member 410. The second screw fastening portion B2 is disposed in the second insulating area I2 , and the second insulating area I2 may surround at least a portion of the second screw fastening portion B2 so as not to interfere with screw fastening for the second screw fastening portion B2. When viewed from above the second support area 532 (e.g., when viewed in the +z axis direction), a distance at which the second screw fastening portion B2 is spaced apart from the conductive area 411 of the first support member 410 may be defined or interpreted as a distance between a third edge included in the second screw fastening portion B2 and a fourth edge of the conductive area 411 of the first support member 410 that at least partially surrounds the third edge.

According to an embodiment, the front case 40 may include a first terminal 4051, a second terminal 4052, a third terminal 4053, and/or a fourth terminal 4054. The first terminal 4051, the second terminal 4052, the third terminal 4053, and the fourth terminal 4054 may be disposed in the non-conductive area 412 of the first support member 410. The first terminal 4051, the second terminal 4052, and the third terminal 4053 may be connected to or integrally formed with the first conductive portion 511. The fourth terminal 4054 may be connected to or integrally formed with the second conductive portion 512. A portion connecting the first terminal 4051 to the first conductive portion 511, a portion connecting the second terminal 4052 to the first conductive portion 511, a portion connecting the third terminal 4053 to the first conductive portion 511, or a portion connecting the fourth terminal 4054 to the second conductive portion 512 may be positioned at least partially inside the non-conductive area 412 included in the first support member 410, for example. The first terminal 4051, the second terminal 4052, the third terminal 4053, and the fourth terminal 4054 may be electrically connected to the second printed circuit board 451 (see FIG. 4) disposed on the second support surface 4102 of the first support member 410. The first terminal 4051, the portion connecting the first terminal 4051 to the first conductive portion 511, the second terminal 4052, the portion connecting the second terminal 4052 to the first conductive portion 511, the third terminal 4053, the portion connecting the third terminal 4053 to the first conductive portion 511, the fourth terminal 4054, or the portion connecting the fourth terminal 4054 to the second conductive portion 512 may be defined or interpreted as a portion of the first support member 410, or a portion of the side member 203.

According to an embodiment, at least some of the plurality of conductive portions included in the side surface conductive structure of the electronic device 200 (e.g., the plurality of conductive portions including the first conductive portion 511, the second conductive portion 512, and the third conductive portion 513 of the side member 203) may be electrically connected to a communication circuit (or wireless communication circuit) of the electronic device 200 (e.g., the wireless communication module 192 in FIG. 1) to operate as an antenna radiator. The communication circuit may process a transmission signal or a reception signal in at least one selected or designated frequency band through an antenna radiator. The selected or designated frequency band may include, for example, at least one of low band (LB) (approximately 600 MHz to approximately 1 GHz), middle band (MB) (approximately 1 GHz to approximately 2.3 GHz), high band (HB) (approximately 2.3 GHz to approximately 2.7 GHz), or ultra-high band (UHB) (approximately 2.7 GHz to approximately 6 GHz). The designated frequency band may include a variety of other frequency bands. The communication circuit may be disposed on the first printed circuit board 441 (see FIG. 4). In some embodiments, the communication circuit may be disposed on the second printed circuit board 451 (see FIG. 4).

For example, the first conductive portion 511 may be electrically connected to a communication circuit of the electronic device 200 (e.g., the wireless communication module 192 in FIG. 1) through some of the first terminal 4051, the second terminal 4052, and the third terminal 4053 to operate as an antenna radiator. The communication circuit may be included in the first substrate assembly 440 (see FIG. 4). The first printed circuit board 441 and the second printed circuit board 451 (see FIG. 4) may be electrically connected, and the first conductive portion 511 electrically connected to the second printed circuit board 451 may be electrically connected to a communication circuit of the first substrate assembly 440. Some of the first terminal 4051, the second terminal 4052, and the third terminal 4053 may be electrically connected to a second ground included in the second substrate assembly 450.

According to an embodiment, the second printed circuit board 451 may include, for example, a plurality of conductive layers and a dielectric material (or insulator) disposed at least partially between the plurality of conductive layers. The plurality of conductive layers of the second printed circuit board 451 may include at least one conductive pattern. One or more conductive patterns included in the plurality of conductive layers of the second printed circuit board 451 may be used as a signal line or an electrical path. One or more conductive patterns included in the plurality of conductive layers of the second printed circuit board 451 may be used as a ground plane (or ground layer). The second printed circuit board 451 may include a plurality of conductive vias. The conductive via may be a conductive hole in which a connection conducting wire is disposed for electrically connecting conductive patterns of different conductive layers. The conductive via may include, for example, a plated through hole (PTH), a laser via hole (LVH), a buried via hole (BVH), or a stacked via. The second ground of the second substrate assembly 440 may include at least one ground plane or ground layer included on the second printed circuit board 451. The first printed circuit board 441 may be formed in a substantially identical or similar manner to the second printed circuit board 451.

For example, the second conductive portion 512 may be electrically connected to a communication circuit of the electronic device 200 (e.g., the wireless communication module 192 in FIG. 1) through the fourth terminal 4054 to operate as an antenna radiator. The first printed circuit board 441 (see FIG. 4) and the second printed circuit board 451 (see FIG. 4) may be electrically connected, and the second conductive portion 511 electrically connected to the second printed circuit board 451 through the fourth terminal 4054 may be electrically connected to the communication circuit of the first substrate assembly 440. Although not illustrated, the front case 40 may include at least one fifth terminal electrically connecting the second conductive portion 512 to the second ground included on the second printed circuit board 451. The third conductive portion 513 or other conductive portions included in the side member 203 may operate as an antenna radiator in a substantially identical or similar manner to the first conductive portion 511 or the second conductive portion 512.

According to an embodiment, the second ground included in the second substrate assembly 450 (see FIG. 4) may be electrically connected to the first ground included in the first substrate assembly 440 (see FIG. 4) (e.g., at least one ground plane or ground layer included on the first printed circuit board 441 in FIG. 4). The first ground of the first substrate assembly 440 may be electrically connected to the conductive area 411 of the first support member 410. The first ground of the first substrate assembly 440 and the conductive area 411 of the first support member 410 may be electrically connected through at least one flexible conductive member, or conductive adhesive member (or conductive adhesive material) positioned between the first printed circuit board 441 of the first substrate assembly 440 and the conductive area 411 of the first support member 410, for example. The second ground of the second substrate assembly 450 may be electrically connected to the conductive area 411 of the first support member 410. The second ground of the second substrate assembly 450 and the conductive area 411 of the first support member 410 may be electrically connected through, for example, at least one flexible conductive member, or conductive adhesive member (or conductive adhesive material) positioned between the second printed circuit board 451 (see FIG. 4) of the second substrate assembly 450 and the conductive area 411 of the first support member 410. The flexible conductive member may include, for example, a conductive clip (e.g., a conductive structure including an elastic structure), a pogo-pin, a spring, a conductive polyurethane foam, a conductive rubber, a conductive tape, or a conductive connector. A conductive structure that includes the first ground of the first substrate assembly 440, the second ground of the second substrate assembly 450, and the conductive area 411 of the first support member 410 may be defined or interpreted as a ground (or ground structure) of the electronic device 200. The ground of the electronic device 200 may operate as an antenna ground that contributes to securing antenna radiation performance and/or coverage, and/or reducing electro-magnetic interference (EMI) (or signal loss), with respect to a plurality of antenna radiators included in the electronic device 200.

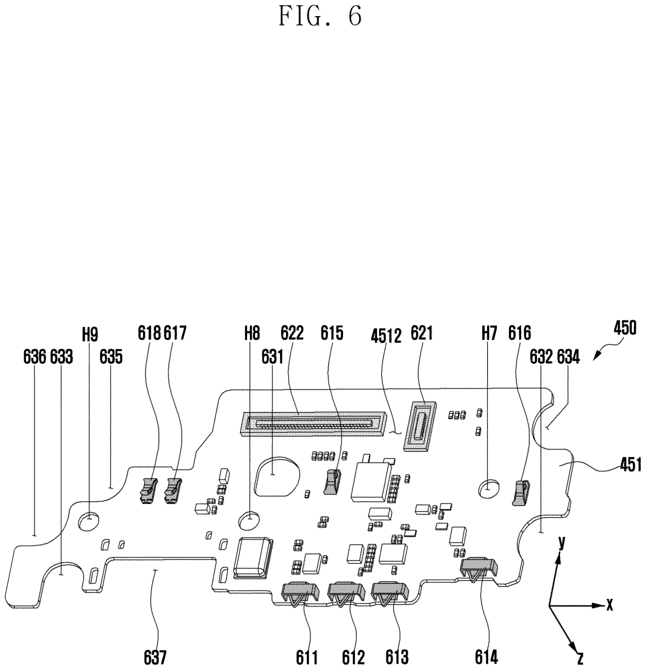

FIG. 6 is a perspective view of the second substrate assembly 450 according to an embodiment.

With reference to FIGS. 5 and 6, the second substrate assembly 450 is disposed on the second support surface 4102 of the first support member 410 to overlap the conductive area 411 or the non-conductive area 412 of the first support member 410 when viewed from above the rear surface plate 202 (see FIG. 3) (e.g., when viewed in the +z axis direction). The second printed circuit board 451 may include a first surface facing the second support surface 4102 of the first support member 410, and a second surface 4512 facing in an opposite direction from the first surface. The second printed circuit board 451 may include a seventh screw hole H7, an eighth screw hole H8, and/or a ninth screw hole H9 that are used for screw fastening with the first support member 410. The seventh screw hole H7, the eighth screw hole H8, or the ninth screw hole H9 may be formed through the first surface and the second surface 4512 of the second printed circuit board 451. The seventh screw hole H7 may overlap or align with the seventh screw fastening portion B7 of the first support member 410. A seventh screw (not illustrated) may penetrate the seventh screw hole H7 and be coupled to the seventh screw fastening portion B7. The eighth screw hole H8 may overlap or align with the eighth screw fastening portion B8 of the first support member 410. An eighth screw (not illustrated) may penetrate the eighth screw hole H8 and be coupled to the eighth screw fastening portion B8. The ninth screw hole H9 may overlap or align with the ninth screw fastening portion B9 of the first support member 410. A ninth screw (not illustrated) may penetrate the ninth screw hole H9 and be coupled to the ninth screw fastening portion B9.

According to an embodiment, the second printed circuit board 451 may include a first opening 631 that corresponds to and overlaps or aligns with the first screw fastening portion B1 of the first support member 410. The second support member 420 (see FIG. 4) may include a first screw hole corresponding to the first screw fastening portion B1. A portion of the second support member 420 that includes the first screw hole may be inserted into the first opening 631 of the second printed circuit board 451 to be in contact with the first screw fastening portion B1 of the first support member 410. In some embodiments, the first screw fastening portion B1 of the first support member 410 may be inserted into the first opening 631 of the second printed circuit board 451 to be in contact with the portion of the second support member 420 that includes the first screw hole. In some embodiments, the first opening 631 of the second printed circuit board 451 may be formed as a screw hole, in which case, a portion of the second printed circuit board 451 that includes the first opening 631 may be disposed between the first screw fastening portion B1 of the first support member 410 and the portion of the second support member 420 that includes the first screw hole.

According to an embodiment, the second printed circuit board 451 may include a second opening 632 that corresponds to and overlaps or aligns with the second screw fastening portion B2 of the first support member 410. The second support member 420 (see FIG. 4) may include a second screw hole corresponding to the second screw fastening portion B2. A portion of the second support member 420 that includes the second screw hole may be inserted into the second opening 632 of the second printed circuit board 451 to be in contact with the second screw fastening portion B2 of the first support member 410. In some embodiments, the second screw fastening portion B2 of the first support member 410 may be inserted into the second opening 632 of the second printed circuit board 451 to be in contact with the portion of the second support member 420 that includes the second screw hole. The second opening 632 may be in the form of a notch, as in the example illustrated, but is not limited thereto and may be formed in the form of a through-hole. In some embodiments, the second opening 632 of the second printed circuit board 451 may be formed as a screw hole, in which case, a portion of the second printed circuit board 451 that includes the second opening 632 may be disposed between the second screw fastening portion B2 of the first support member 410 and the portion of the second support member 420 that includes the second screw hole.

According to an embodiment, the second printed circuit board 451 may include a third opening 633 that corresponds to and overlaps or aligns with the third screw fastening portion B3 of the first support member 410. The second support member 420 (see FIG. 4) may include a third screw hole corresponding to the third screw fastening portion B3. A portion of the second support member 420 that includes the third screw hole may be inserted into the third opening 633 of the second printed circuit board 451 to be in contact with the third screw fastening portion B3 of the first support member 410. In some embodiments, the third screw fastening portion B3 of the first support member 410 may be inserted into the third opening 633 of the second printed circuit board 451 to be in contact with the portion of the second support member 420 that includes the third screw hole. The third opening 633 may be in the form of a notch, as in the example illustrated, but is not limited thereto and may be formed in the form of a through-hole. In some embodiments, the third opening 633 of the second printed circuit board 451 may be formed as a screw hole, in which case, a portion of the second printed circuit board 451 that includes the third opening 633 may be disposed between the third screw fastening portion B3 of the first support member 410 and the portion of the second support member 420 that includes the third screw hole.

According to an embodiment, the second printed circuit board 451 may include a fourth opening 634 that corresponds to and overlaps or aligns with the fourth screw fastening portion B4 of the first support member 410. The second support member 420 (see FIG. 4) may include a fourth screw hole corresponding to the fourth screw fastening portion B4. A portion of the second support member 420 that includes the fourth screw hole may be inserted into the fourth opening 634 of the second printed circuit board 451 to be in contact with the fourth screw fastening portion B4 of the first support member 410. In some embodiments, the fourth screw fastening portion B4 of the first support member 410 may be inserted into the fourth opening 634 of the second printed circuit board 451 to be in contact with the portion of the second support member 420 that includes the fourth screw hole. The fourth opening 634 may be in the form of a notch, as in the example illustrated, but is not limited thereto and may be formed in the form of a through-hole. In some embodiments, the fourth opening 634 of the second printed circuit board 451 may be formed as a screw hole, in which case, a portion of the second printed circuit board 451 that includes the fourth opening 634 may be disposed between the fourth screw fastening portion B4 of the first support member 410 and the portion of the second support member 420 that includes the fourth screw hole.

According to an embodiment, the second printed circuit board 451 may include a fifth opening 635 that corresponds to and overlaps or aligns with the fifth screw fastening portion B5 of the first support member 410. The second support member 420 (see FIG. 4) may include a fifth screw hole corresponding to the fifth screw fastening portion B5. A portion of the second support member 420 that includes the fifth screw hole may be inserted into the fifth opening 635 of the second printed circuit board 451 to be in contact with the fifth screw fastening portion B5 of the first support member 410. In some embodiments, the fifth screw fastening portion B5 of the first support member 410 may be inserted into the fifth opening 635 of the second printed circuit board 451 to be in contact with the portion of the second support member 420 that includes the fifth screw hole. The fifth opening 635 may be in the form of a notch, as in the example illustrated, but is not limited thereto and may be formed in the form of a through-hole. In some embodiments, the fifth opening 635 of the second printed circuit board 451 may be formed as a screw hole, in which case, a portion of the second printed circuit board 451 that includes the fifth opening 635 may be disposed between the fifth screw fastening portion B5 of the first support member 410 and the portion of the second support member 420 that includes the fifth screw hole.

According to an embodiment, the second printed circuit board 451 may include a sixth opening 636 that corresponds to and overlaps or aligns with the sixth screw fastening portion B6 of the first support member 410. The second support member 420 (see FIG. 4) may include a sixth screw hole corresponding to the sixth screw fastening portion B6. A portion of the second support member 420 that includes the sixth screw hole may be inserted into the sixth opening 636 of the second printed circuit board 451 to be in contact with the sixth screw fastening portion B6 of the first support member 410. In some embodiments, the sixth screw fastening portion B6 of the first support member 410 may be inserted into the sixth opening 636 of the second printed circuit board 451 to be in contact with the portion of the second support member 420 that includes the sixth screw hole. The sixth opening 636 may be in the form of a notch, as in the example illustrated, but is not limited thereto and may be formed in the form of a through-hole. In some embodiments, the sixth opening 636 of the second printed circuit board 451 may be formed as a screw hole, in which case, a portion of the second printed circuit board 451 that includes the sixth opening 636 may be disposed between the sixth screw fastening portion B6 of the first support member 410 and the portion of the second support member 420 that includes the sixth screw hole.

According to an embodiment, the second substrate assembly 450 may include a plurality of electronic components disposed on the first surface or the second surface 4512 of the second printed circuit board 451. In an embodiment, a first flexible conductive member 611, a second flexible conductive member 612, a third flexible conductive member 613, a fourth flexible conductive member 614, a fifth flexible conductive member 615, a sixth flexible conductive member 616, a seventh flexible conductive member 617, an eighth flexible conductive member 618, a third connector 621, or a fourth connector 622 may be disposed on the second surface 4512 of the second printed circuit board 451. A microphone included in the first audio module 302 (see FIG. 2) may be disposed on the second printed circuit board 451. A first connector included in the first connection terminal module 310 (see FIG. 2) may be disposed on the second printed circuit board 451. The first connector (e.g., a USB connector), for example, a middle-mounting type (or a sink type) connector, may be positioned in a notch 637 formed in the second printed circuit board 451 in correspondence to a first connector hole formed in the first conductive portion 511. A second connector (e.g., a SIM card connector) (not illustrated) included in the second connection terminal module 311 (see FIG. 2) may be disposed on the first surface of the second printed circuit board 451.

According to an embodiment, the first flexible conductive member 611 may be in elastic contact with the first terminal 4051 of the front case 40. The second flexible conductive member 612 may be in elastic contact with the second terminal 4052 of the front case 40. The third flexible conductive member 613 may be in elastic contact with the third terminal 4053 of the front case 40. The fourth flexible conductive member 614 may be in elastic contact with the fourth terminal 4054 of the front case 40.

According to an embodiment, the fifth flexible conductive member 615 and the sixth flexible conductive member 616 may be positioned between the second printed circuit board 451 and the second support member 420 (see FIG. 4). The second support member 420 may be electrically connected to the second printed circuit board 451 through the fifth flexible conductive member 615 and the sixth flexible conductive member 616. The second printed circuit board 451 may include a fifth terminal (e.g., a copper film pad) corresponding to the fifth flexible conductive member 615, and the fifth flexible conductive member 615 may be in elastic contact with the fifth terminal. The second printed circuit board 451 may include a sixth terminal (e.g., a copper film pad) corresponding to the sixth flexible conductive member 616, and the sixth flexible conductive member 616 may be in elastic contact with the sixth terminal.

According to an embodiment, the seventh flexible conductive member 617 and the eighth flexible conductive member 618 may be positioned between an electrical element coupled to (or disposed on) the second support member 420 (see FIG. 4) and the second printed circuit board 451. The electrical element coupled to the second support member 420 may be electrically connected to the second printed circuit board 451 through the seventh flexible conductive member 617 and the eighth flexible conductive member 618. The electrical element coupled to the second support member 420 may be, for example, a first speaker (or a speaker module) included in the second audio module 303 (see FIG. 2).

According to an embodiment, the first flexible conductive member 611, the second flexible conductive member 612, the third flexible conductive member 613, the fourth flexible conductive member 614, the fifth flexible conductive member 615, the sixth flexible conductive member 616, the seventh flexible conductive member 617, or the eighth flexible conductive member 618 may be a conductive clip (e.g., a conductive structure that includes an elastic structure). In some embodiments, the first flexible conductive member 611, the second flexible conductive member 612, the third flexible conductive member 613, the fourth flexible conductive member 614, the fifth flexible conductive member 615, the sixth flexible conductive member 616, the seventh flexible conductive member 617, or the eighth flexible conductive member 618 may be implemented as a pogo pin, a spring, a conductive polyurethane foam, a conductive rubber, a conductive tape, or a conductive connector.

According to an embodiment, the third connector 621 may be electrically connected to the first printed circuit board 441 (see FIG. 4) using a first flexible printed circuit board (not illustrated). The fourth connector 622 may be electrically connected to the first printed circuit board 441 using a second flexible printed circuit board (not illustrated).

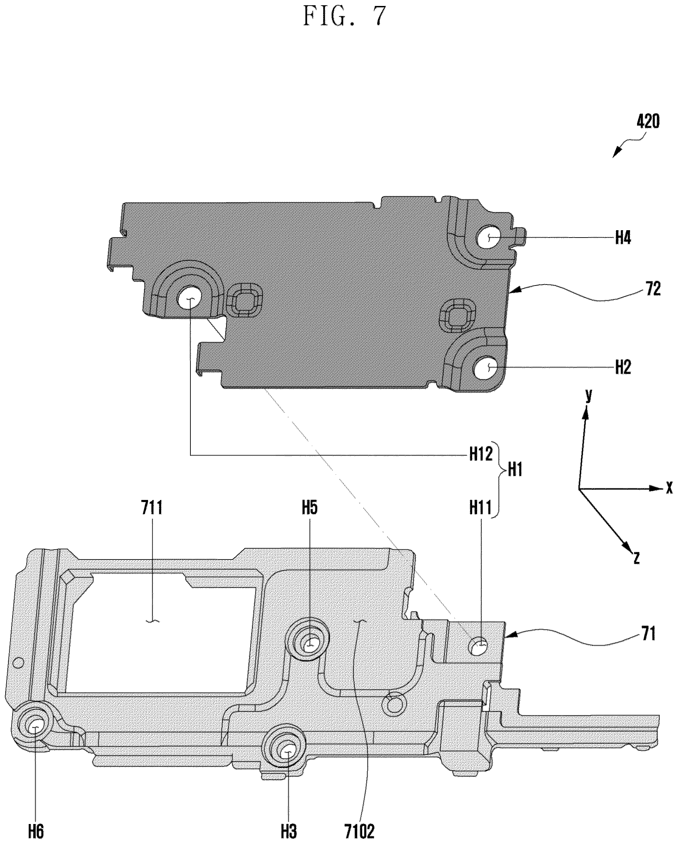

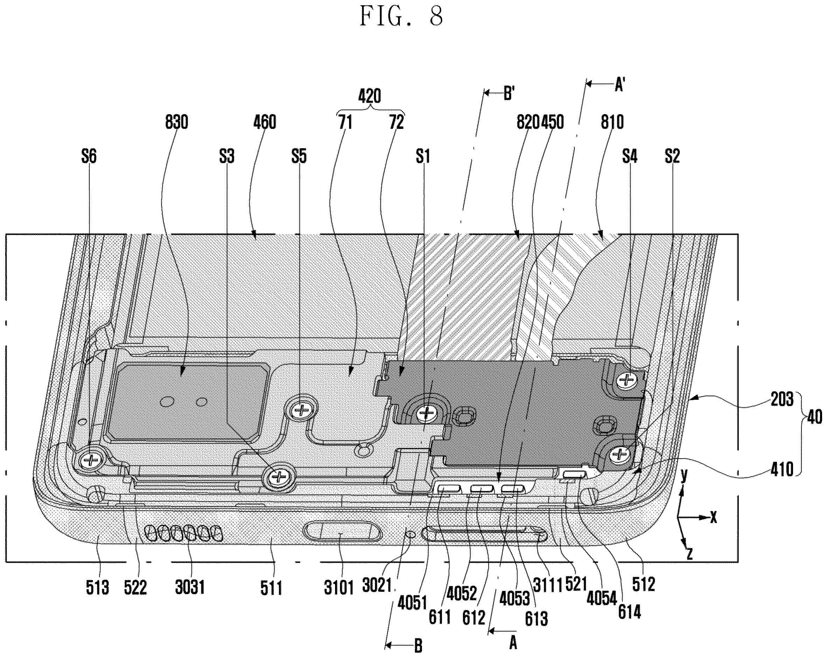

FIG. 7 is an exploded perspective view of the second support member 420 according to an embodiment. FIG. 8 is a perspective view of the electronic device 200, in an embodiment.

With reference to FIGS. 7 and 8, the electronic device 200 may include the front case 40, the second substrate assembly 450, the second support member 420, the battery 460, a first flexible printed circuit board 810, a second flexible printed circuit board 820, and/or a first speaker 830.

According to an embodiment, the second support member 420 may be positioned between the first support member 410 and the rear surface plate 202 (see FIG. 4), and may be coupled to the first support member 410 using a first screw S1 , a second screw S2, a third screw S3, a fourth screw S4, a fifth screw S5, and/or a sixth screw S6. At least a portion of the second substrate assembly 450 may be positioned between the first support member 410 and the second support member 420, and the second support member 420 may cover and protect the second substrate assembly 450. The second substrate assembly 450 disposed on the first support member 410 may be electrically connected to the first conductive portion 511 of the side member 203 through the first terminal 4051, the second terminal 4052, and the third terminal 4053. The second substrate assembly 450 disposed on the first support member 410 may be electrically connected to the second conductive portion 512 of the side member 203 through the fourth terminal 4054. A first connector (e.g., a USB connector) included in the second substrate assembly 450 may be positioned in correspondence to a first connector hole 3101 formed in the first conductive portion 511 of the side member 203. A microphone included in the second substrate assembly 450 may be positioned in correspondence to a microphone hole 3021 formed in the first conductive portion 511 of the side member 203. A second connector (e.g., a SIM connector) included in the second substrate assembly 450 may be positioned in correspondence to a second connector hole 3111 formed in the first conductive portion 511 of the side member 203. The first speaker (or first speaker module) 830 may be disposed on the second support member 420 in correspondence to a first speaker hole 3031 formed in the first conductive portion 511 of the side member 203.

According to an embodiment, the second support member 420 may include a non-conductive structure 71 and a conductive structure 72. The non-conductive structure 71 may be referred to as various other terms, such as "non-conductive member," "non-metallic member," "non-conductive structure," "non-metallic structure," "non-conductive support structure," "non-conductive support," or "non-metallic support. The conductive structure 72 may be referred to as various other terms, such as "conductive member," " metallic member," "conductive structure," "metallic structure," "conductive support structure," "conductive support," or "metallic support. The non-conductive structure 71 may include a variety of polymers, such as an engineering plastic (e.g., PC or PMMA). The non-conductive structure 71 may include, for example, a polymer resin such as polyetheretherketone, polyphenylene sulfide, polybutylene terephthalate, polyimide, or polycarbonate. In some embodiments, the non-conductive structure 71 may include a material (e.g., a fiber reinforced plastic (FRP)) that is a blend of an engineering plastic with various reinforcement substrates, such as glass fibers or carbon fibers. The non-conductive structure 71 may include a variety of other non-metallic materials. The conductive structure 72 may include, for example, titanium, an amorphous alloy, a metal-ceramic composite material (e.g., cermet), or stainless steel. In some embodiments, the conductive structure 72 may include magnesium, a magnesium alloy, aluminum, an aluminum alloy, a zinc alloy, or a copper alloy. The conductive structure 72 may include a variety of other metallic materials.

According to an embodiment, the non-conductive structure 71 may be positioned at least partially in a first space of a space between the first support member 410 and the rear surface plate 202. The conductive structure 72 may be positioned at least partially in a second space of the space between the first support member 410 and the rear surface plate 202 (see FIG. 3). When viewed from above the rear surface plate 202 (e.g., when viewed in the +z axis direction), the second space may not overlap the first space. When viewed from above the rear surface plate 202, there may be a portion where the non-conductive structure 71 and the conductive structure 72 overlap, and this overlapping portion may be positioned in a third space of the space between the first support member 410 and the rear surface plate 202 that is different from the first space and the second space.

According to an embodiment, the second support member 420 may include a first screw hole H1, a second screw hole H2, a third screw hole H3, a fourth screw hole H4, a fifth screw hole H5, and/or a sixth screw hole H6. The first screw hole H1 may correspond to the first screw fastening portion B1 of the first support member 410 (see FIG. 5). The first screw S1 may penetrate the first screw hole H1 and be coupled to the first screw fastening portion B 1. The second screw hole H2 may correspond to the second screw fastening portion B2 of the first support member 410 (see FIG. 5). The second screw S2 may penetrate the second screw hole H2 and be coupled to the second screw fastening portion B2. The third screw hole H3 may correspond to the third screw fastening portion B3 of the first support member 410 (see FIG. 5). The third screw S3 may penetrate the third screw hole H3 and be coupled to the third screw fastening portion B3. The fourth screw hole H4 may correspond to the fourth screw fastening portion B4 of the first support member 410 (see FIG. 5). The fourth screw S4 may penetrate the fourth screw hole H4 and be coupled to the fourth screw fastening portion B4. The fifth screw hole H5 may correspond to the fifth screw fastening portion B5 of the first support member 410 (see FIG. 5). The fifth screw S5 may penetrate the fifth screw hole H5 and be coupled to the fifth screw fastening portion B5. The sixth screw hole H6 may correspond to the sixth screw fastening portion B6 of the first support member 410 (see FIG. 5). The sixth screw S6 may penetrate the sixth screw hole H6 and be coupled to the sixth screw fastening portion B6.

According to an embodiment, the first screw hole H1 may be formed in a portion where the non-conductive structure 71 and the conductive structure 72 overlap when viewed from above the rear surface plate 202 (see FIG. 3) (e.g., when viewed in the +z axis direction). The first screw hole H1 may include a first hole H11 formed in the non-conductive structure 71 at a portion where the non-conductive structure 71 and the conductive structure 72 overlap. The first screw hole H1 may include a second hole H12 formed in the conductive structure 72 at a portion where the non-conductive structure 71 and the conductive structure 72 overlap. The first hole H11 and the second hole H12 may overlap and be aligned with each other.

According to an embodiment, the second screw hole H2 and the fourth screw hole H4 may be formed in the conductive structure 72 of the second support member 420. The third screw hole H3, the fifth screw hole H5, and the sixth screw hole H6 may be formed in the non-conductive structure 71 of the second support member 420.

The screw fastening structure may be defined or interpreted as including a screw, a screw hole included in the second support member 420 in correspondence to the screw, and a screw fastening portion (e.g., a boss including a female thread) included in the first support member 410 in correspondence to the screw. The position or number of screw fastening structures may vary without being limited to the example illustrated.

According to some embodiments, although not illustrated, the second support member 420 may further include an adhesive material interposed in a portion where the non-conductive structure 71 and the conductive structure 72 overlap when viewed from above the rear surface plate 202 (see FIG. 3) (e.g., when viewed in the +z axis direction). The non-conductive structure 71 and the conductive structure 72 may be coupled using a bonding that includes an adhesive material.

According to some embodiments, although not illustrated, the portion where the non-conductive structure 71 and the conductive structure 72 overlap may include an interlacing structure, such as a dovetail.

According to some embodiments, a portion of the conductive structure 72 may be disposed inside the non-conductive structure 71.

According to some embodiments, a portion of the non-conductive structure 71 may be disposed inside the conductive structure 72.

According to some embodiments, the non-conductive structure 71 may be molded into a form to be coupled to the conductive structure 72 using insert injection molding. For example, the conductive structure 72 may be positioned within a mold and then injection molded to form the integrated second support member 420 in which the non-conductive structure 71 and the conductive structure 72 are coupled.

According to an embodiment, the first flexible printed circuit board 810 and the second flexible printed circuit board 820 may electrically connect the first printed circuit board 441 (see FIG. 4) to the second printed circuit board 451 (see FIG. 6). The first flexible printed circuit board 810 may be electrically connected to the third connector 621 (see FIG. 6) disposed on the second printed circuit board 451 (see FIG. 5). The second flexible printed circuit board 820 may be electrically connected to the fourth connector 622 (see FIG. 6) disposed on the second printed circuit board 451. A signal between the constituent elements included in the first substrate assembly 440 (see FIG. 4) and the constituent elements included in the second substrate assembly 450 may be transmitted through the first flexible printed circuit board 810 and the second flexible printed circuit board 820. In an embodiment, the first flexible printed circuit board 810 and the second flexible printed circuit board 820 may electrically connect the first substrate assembly 440 (see FIG. 4) to the second substrate assembly 450 across the battery 460 disposed on the first support member 410.

According to an embodiment, the first speaker 830 may be disposed on the non-conductive structure 71 of the second support member 420. The second support member 420 may include, for example, an opening 711, and the first speaker 830 may be positioned in the opening 711. The first speaker 830 may be electrically connected to the second printed circuit board 451 (see FIG. 6) through flexible conductive members (e.g., the seventh flexible conductive member 617 and the eighth flexible conductive member 618 in FIG. 6).

According to an embodiment, the conductive structure 72 of the second support member 420 may be electrically connected to the second printed circuit board 451 (see FIG. 6) through at least one flexible conductive member. A communication circuit (e.g., the wireless communication module 192 in FIG. 1) may be included in the first substrate assembly 440 (see FIG. 4) and may be electrically connected to the conductive structure 72 of the second support member 420 through the first flexible printed circuit board 810 or the second flexible printed circuit board 820. The conductive structure 72 may operate as a radiation portion (or an antenna radiator) that radiates (or transmits) an electromagnetic signal provided (or fed) from the communication circuit to an exterior of the electronic device 200 or receives an electromagnetic signal from the exterior of the electronic device 200. A portion of the conductive structure 72 that receives an electromagnetic signal from the communication circuit through the flexible conductive member may be referred to as a "feeding point" or "feeding area". The feeding point may be a portion of the conductive structure 72 where the intensity of an electric field (E(electric)-field) is maximized when a radiated current is supplied to the conductive structure 72, or a portion of the conductive structure 72 where the intensity of the electric field is relatively large. In an embodiment, the communication circuit may provide an electromagnetic signal to the conductive structure 72 through the fifth flexible conductive member 615 in FIG. 6 and/or the sixth flexible conductive member 616 in FIG. 6 of the conductive structure 72. The conductive structure 72 may include a first feeding point corresponding to the fifth flexible conductive member 615 in FIG. 6, and/or a second feeding point corresponding to the sixth flexible conductive member 616 in FIG. 6. The position or number of feeding points on the conductive structure 72 may vary, and the position or number of flexible conductive members corresponding to the feeding points may also vary. The communication circuit may provide an electromagnetic signal (or radiated current) to the conductive structure 72 through the feeding point, and the conductive structure 72 may radiate (or transmit) the electromagnetic signal provided (or fed) from the communication circuit to the outside of the electronic device 200. The conductive structure 72 may receive an electromagnetic signal from the outside of the electronic device 200, and the received electromagnetic signal may be transmitted to the feeding point, and to the communication circuit through a transmission line that connects the feeding point to the communication circuit. The transmission line may be an electrical path through which signals (voltage and current) of radio frequency (RF) are transmitted between an antenna radiator and a communication circuit. A signal having a frequency included in at least one selected or designated frequency band (hereinafter, a "frequency signal") may be transmitted through a transmission line. In some embodiments, the transmission line may be referred to as an "RF chain. A connection portion between a transmission line and an antenna radiator may be defined or interpreted as an antenna port (or RF port). The communication circuit may process a transmission signal or a reception signal in at least one selected or designated frequency band through the conductive structure 72 of the second support member 420. The selected or designated frequency band may include at least one of, for example, LB, MB, HB, or UHB. The designated frequency band may include a variety of other frequency bands.

According to an embodiment, the conductive structure 72 of the second support member 420 may be electrically connected to a ground of the electronic device 200. The ground of the electronic device 200 may be a conductive structure (or ground structure) that includes the first ground of the first substrate assembly 440, the second ground of the second substrate assembly 450, and the conductive area 411 of the first support member 410. A portion of the conductive structure 72 that is electrically connected to the ground of the electronic device 200 may be referred to as a "grounding point," a "grounding area," or a "grounding portion. The grounding point may be a portion of the conductive structure 72 where the intensity of an electric field is substantially zero when a radiated current is supplied to the conductive structure 72. The ground of the electronic device 200 may operate as an antenna ground to the conductive structure 72, which is an antenna radiator.

According to an embodiment, the conductive structure 72 of the second support member 420 may be electrically connected to the conductive area 411 of the first support member 410 (see FIG. 5), which is included in the ground of the electronic device 200. For example, the conductive structure 72 of the second support member 420 and the conductive area 411 of the first support member 410 may be electrically connected through the fourth screw S4.

According to some embodiments, the conductive support structure 72 of the second support member 420 and the second ground of the second substrate assembly 450 (e.g., at least one ground plane or ground layer included on the second printed circuit board 451 in FIG. 4) may be electrically connected through a flexible conductive member (e.g., a conductive clip, a pogo pin, a spring, a conductive polyurethane foam, a conductive rubber, a conductive tape, or a conductive connector) positioned between the conductive support structure 72 and the second printed circuit board 451.

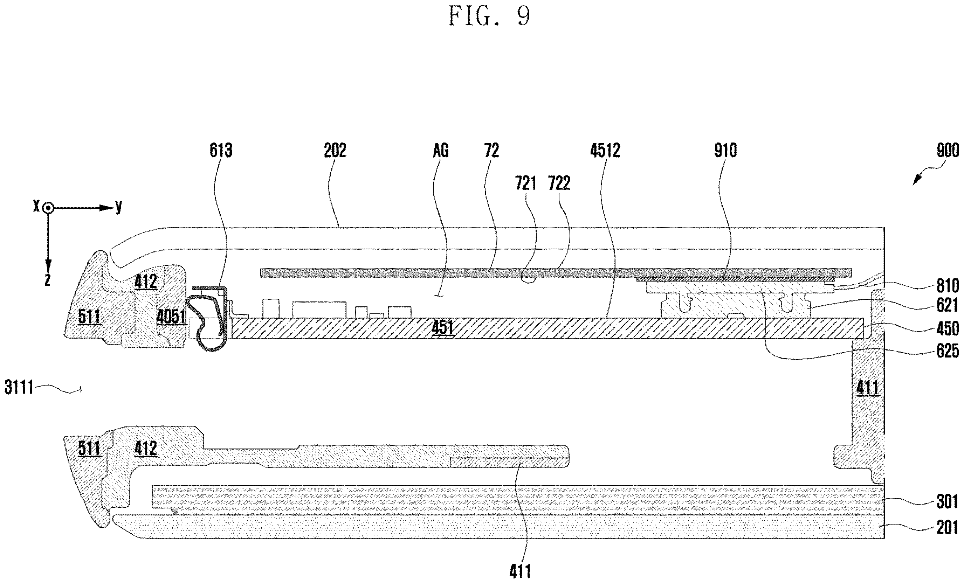

FIG. 9 illustrates a cross-sectional structure 900 taken along line A-A' in FIG. 8 in the y-z plane, in an embodiment.

With reference to FIG. 9, the cross-sectional structure 900 may include the front surface plate 201, the display 301, the first conductive portion 511 of the side member 203 (see FIG. 5), the conductive area 411 of the first support member 410 (see FIG. 5), and the non-conductive area 412 of the first support member 410, the second substrate assembly 450, the third flexible conductive member 613, the conductive structure 72 of the second support member 420 (see FIG. 7), the third connector 621, the fifth connector 625, the first flexible printed circuit board 810, and/or a first insulating member 910.

According to an embodiment, the third flexible conductive member 613 may be disposed on the second printed circuit board 451 of the second substrate assembly 450 and may be in elastic contact with the third terminal 4053. The third terminal 4053 may be electrically connected to the first conductive portion 511. A portion (not illustrated) connected to the third terminal 4053 and the first conductive portion 511 may be disposed at least partially inside the non-conductive area 412 of the first support member 410 (see FIG. 5). In an embodiment, the first conductive portion 511, the third terminal 4053, and the portion connecting the third terminal 4053 to the first conductive portion 511 may be integrally formed and include the same metallic material. The third terminal 4053, and the portion connecting the third terminal 4053 to the first conductive portion 511, may be defined or interpreted as a portion of the first support member 410, or a portion of the side member 203 (see FIG. 5).

According to an embodiment, the conductive structure 72 may be positioned at least partially between the second printed circuit board 451 and the rear surface plate 202. The conductive structure 72 may include, for example, the form of a metal plate that includes a third surface 721 that faces the second surface 4512 of the second printed circuit board 451 and a fourth surface 722 that faces the rear surface plate 202. The conductive structure 72 may be electrically connected to the communication circuit of the electronic device 200 (e.g., the wireless communication module 192 in FIG. 1) to operate as an antenna radiator.

According to an embodiment, the third connector 621 may be disposed on the second surface 4512 of the second printed circuit board 451. The third connector 621 and the fifth connector 625 may be positioned between the second surface 4512 of the second printed circuit board 451 and the third surface 721 of the conductive structure 72. The fifth connector 625 may be electrically connected to the third connector 621. The fifth connector 625 may be connected to the first flexible printed circuit board 810. For example, the second printed circuit board 451 may be electrically connected to the first printed circuit board 441 of the first substrate assembly 440 (see FIG. 4) through energization between the third connector 621 and the fifth connector 625, and through the first flexible printed circuit board 810. The fifth connector 625 may be positioned between the third connector 621 and the conductive support structure 72. The conductive structure 72 may support or press the fifth connector 625 toward the third connector 621 so that the fifth connector 625 is not separate from the third connector 621.

According to an embodiment, an air gap AG may be formed between the conductive structure 72 and the second substrate assembly 450 (or the second printed circuit board 451). There may be a comparative example that includes an integrated non-conductive support member and a conductive pattern disposed on a surface facing the rear surface plate 202 of the integrated non-conductive support member, replacing the non-conductive structure 71 (see FIG. 7) and the second support member 420 (see FIG. 7) that includes the conductive structure 72. In a comparative example, the conductive pattern may be electrically connected with a communication circuit to operate as an antenna radiator. In a comparative example, the non-conductive support member is positioned at least partially between the conductive pattern and the second substrate assembly 450, and a permittivity that the non-conductive support member has may have an effect on antenna radiation performance or coverage with respect to an antenna radiator being used as the conductive pattern. An embodiment of the present disclosure may reduce the size or volume of a dielectric material (e.g., a non-conductive support member of a comparative example) that may have an effect on an electromagnetic field formed by an antenna radiator that includes the conductive structure 72, compared to a comparative example. An embodiment of the present disclosure may facilitate securing an air gap AG having a permittivity that may reduce an effect on an electromagnetic field formed by an antenna radiator in a slimmed space of the electronic device 200, compared to a comparative example. Accordingly, an embodiment of the present disclosure may reduce a dielectric loss and thus have improved antenna radiation performance or coverage compared to a comparative example. The air gap AG may be formed at a thickness that may contribute to the slimming of the electronic device 200 while securing antenna radiation performance with respect to the conductive structure 72. Since the conductive structure 72 according to an embodiment of the present disclosure is formed of a metallic material capable of securing rigidity, strength, and/or durability, the conductive structure 72 may be formed at a thinner thickness than a non-conductive support member according to a comparative example, which may contribute to the slimming of the electronic device 200.

According to an embodiment, the conductive structure 72 may have a thickness of a value included in the range of approximately 0.1 mm to approximately 0.5 mm. Being referred to as a "comparative example" is provided just to be compared with an embodiment of the present disclosure but does not have the preceding status with respect to the embodiments of the present disclosure

According to some embodiments, a separate dielectric material (not illustrated) may be positioned between the conductive structure 72 and the second substrate assembly 450 (or the second printed circuit board 451). The dielectric material may be disposed, for example, on the third surface 721 of the conductive structure 72. In another example, the dielectric material may be a portion of the non-conductive structure 71 (see FIG. 7) that extends further between the third surface 721 of the conductive structure 72 and the second surface 4512 of the second printed circuit board 451. In some embodiments, the dielectric material may be disposed in the second substrate assembly 450. The dielectric material may serve as a support member that contributes to the stable positioning of the conductive structure 72 with respect to the second substrate assembly 450. The permittivity of the dielectric material may be a value that contributes to not degrading antenna radiation performance for the conductive structure 72 operating as an antenna radiator to a threshold level or below. The permittivity of the dielectric material may be a value that may reduce an electromagnetic effect on the conductive structure 72 operating as an antenna radiator, for example. The permittivity of the dielectric material may be a value that is smaller than the permittivity of the conductive structure 72 and reduces a difference from the permittivity of air (e.g., a low permittivity).

According to an embodiment, the first insulating member 910 may be positioned between the fifth connector 625 and the conductive structure 72. The first insulating member 910 may be disposed on the fifth connector 625 or the conductive structure 72. The fifth connector 625 may have a conductive area that faces the conductive structure 72, and the first insulating member 910 may physically separate the fifth connector 625 and the conductive structure 72. The fifth connector 625 may include a plurality of connector terminals and a connector housing (or connector support member) that supports the plurality of connector terminals. The connector housing may include the conductive area of the fifth connector 625 that faces the conductive structure 72. The connector housing of the fifth connector 625 may be electrically connected to a connector housing of the third connector 621, and the connector housing of the third connector 621 may be electrically connected to the ground plane included on the second printed circuit board 451. When the conductive structure 72 and the connector housing of the fifth connector 625 are in contact, a portion of the conductive structure 72 with which the connector housing of the fifth connector 625 is in contact becomes a grounding portion. Accordingly, there may be a limitation in securing an area of the conductive structure 72 that operates as a radiation portion. The first insulating member 910 may prevent energization between the conductive structure 72 and the fifth connector 625, thereby contributing to extending an area of the conductive structure 72 that operates substantially as a radiation portion. The first insulating member 910 may prevent energization between the fifth connector 625 and the conductive structure 72, thereby reducing degradation of antenna radiation performance for an antenna radiator that includes the conductive structure 72. The first insulating member 910 may allow the conductive structure 72 and the fifth connector 625 to have a spacing distance therebetween, which may contribute to securing antenna radiation performance for an antenna radiator that includes the conductive structure 72. The first insulating member 910 may have a permittivity that may contribute to not degrading antenna radiation performance to a threshold level or below for an antenna radiator that includes the conductive structure 72. The permittivity of the first insulating member 910 may be a value that may reduce an electromagnetic effect on an antenna radiator that includes the conductive structure 72, for example.

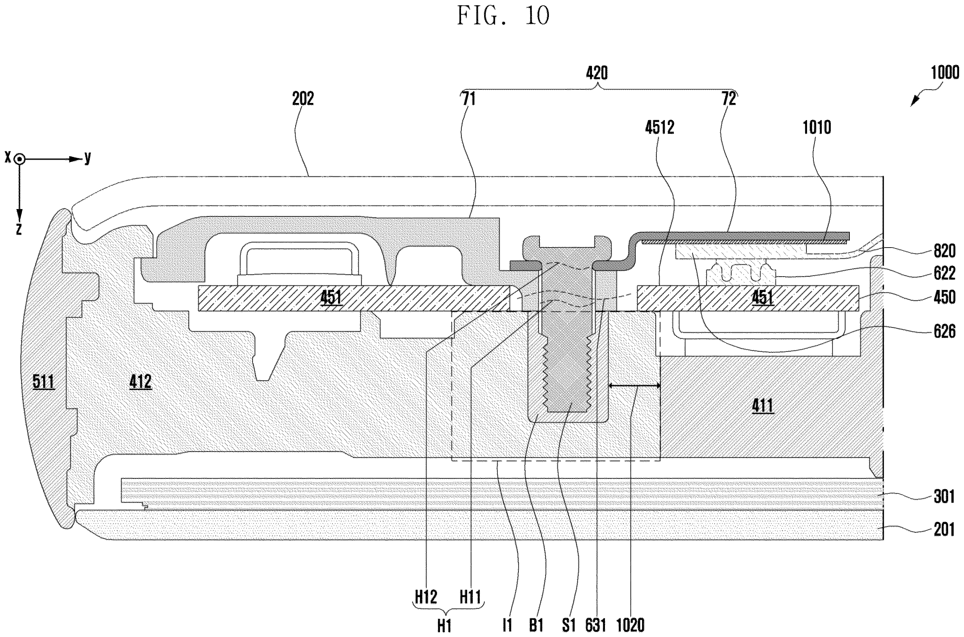

FIG. 10 illustrates a cross-sectional structure 1000 taken along line B-B' in the y-z plane in FIG. 8, in an embodiment.

With reference to FIG. 10, the cross-sectional structure 1000 may include the front surface plate 201, the display 301, the first conductive portion 511 of the side member 203 (see FIG. 5), the conductive area 411 of the first support member 410 (see FIG. 5), the non-conductive area 412 of the first support member 410, the second substrate assembly 450, the second support member 420, the fourth connector 622, the sixth connector 626, the second flexible printed circuit board 820, and/or a second insulating member 1010.

According to an embodiment, the second printed circuit board 451 of the second substrate assembly 450 may include the first opening 631 that corresponds to and overlaps or aligns with the first screw fastening portion B1 of the first support member 410 (see FIG. 5). The second support member 420 may include the first screw hole H1 corresponding to the first screw fastening portion B1. The first screw hole H1 may be formed in a portion where the non-conductive structure 71 and the conductive structure 72 overlap when viewed from above the rear surface plate 202 (e.g., when viewed in the +z axis direction). The first screw hole H1 may include the first hole H11 formed in the non-conductive structure 71 at a portion where the non-conductive structure 71 and the conductive structure 72 overlap. The first screw hole H1 may include the second hole H12 formed in the conductive structure 72 at a portion where the non-conductive structure 71 and the conductive structure 72 overlap. The first hole H11 may be positioned between the second hole H12 and the first screw fastening portion B1. The first screw S1 may penetrate the second hole H12 and the first hole H11 and be coupled to the first screw fastening portion B1.

According to an embodiment, a portion of the non-conductive structure 71 of the second support member 420 that includes the first hole H11 may be inserted into the first opening 631 of the second printed circuit board 451 to be in contact with the first screw fastening portion B1 of the first support member 410. In some embodiments, the first screw fastening portion B1 of the first support member 410 may be inserted into the first opening 631 of the second printed circuit board 451 to be in contact with the portion the non-conductive structure 71 of the second support member 420 that includes the first hole H11. In some embodiments, the first opening 631 of the second printed circuit board 451 may be formed as a screw hole, in which case, a portion of the second printed circuit board 451 that includes the first opening 631 may be disposed between the first screw fastening portion B1 of the first support member 410 and the portion of the second support member 420 that includes the first screw hole H1.

According to an embodiment, the fourth connector 622 may be disposed on the second surface 4512 of the second printed circuit board 451. The fourth connector 622 and the sixth connector 626 may be positioned between the second printed circuit board 451 and the conductive structure 72. The sixth connector 626 may be connected to the fourth connector 622. The sixth connector 626 may be connected to the second flexible printed circuit board 820. The second printed circuit board 451 may be electrically connected to the first printed circuit board 441 of the first substrate assembly 440 (see FIG. 4) through energization between the fourth connector 622 and the sixth connector 626, and through the second flexible printed circuit board 820. The sixth connector 626 may be positioned between the fourth connector 622 and the conductive support structure 72. The conductive structure 72 may support or press the sixth connector 626 toward the fourth connector 622 so that the sixth connector 626 is not separate from the fourth connector 622. The screw fastening portion may be defined or interpreted as including the first screw S1, the first screw hole H1 included in the second support member 420 in correspondence to the first screw S 1, and the first screw fastening portion B1 included in the first support member 410 in correspondence to the first screw H1. The screw fastening structure may contribute to a portion of the conductive structure 72 corresponding to the sixth connector 626 reliably supporting the sixth connector 626.

According to an embodiment, the conductive structure 72, the first screw S 1, the first screw fastening portion B1, the second screw S2 (see FIG. 8), and the second screw fastening portion B2 (see FIG. 5) may form an electrically and mechanically connected conductive assembly. The conductive assembly may operate as a radiation portion (or antenna radiator) that radiates an electromagnetic signal provided (or fed) from the communication circuit included in the electronic device 200 (e.g., the wireless communication module 192 in FIG. 1) to the outside, or receives an electromagnetic signal from the outside. References to an "antenna radiator including the conductive structure 72" as disclosed in the present disclosure may be defined or interpreted as including the conductive structure 72 of the conductive assembly at least in part.

According to an embodiment, the first screw fastening portion B1 and/or the second screw fastening portion B2 (see FIG. 8) may be an island boss disposed in the non-conductive area 412 of the first support member 410 (see FIG. 5) to be physically separate from the conductive area 411 of the first support member 410. There may be a first comparative example in which the first screw fastening portion B1 is formed in the conductive area 411 of the first support member 410. In the first comparative example, the conductive structure 72 may be electrically connected to the conductive area 411 that is part of the ground of the electronic device 200 of the first support member 410 through the first screw fastening portion B 1. In the first comparative example, a portion of the conductive area 411 of the first support member 410 corresponding to the first screw fastening portion B1 may be a grounding portion in which the intensity of an electric field is substantially zero when a radiated current is supplied to the conductive structure 72. According to an embodiment, the first screw fastening portion B1 implemented in the form of an island boss may reduce the grounding portion compared to the first comparative example, thereby contributing to extending an area of the conductive structure 72 that operates substantially as a radiation portion. There may be a second comparative example in which the second screw fastening portion B2 is formed in the conductive area 411 of the first support member 410. In the second comparative example, the conductive structure 72 may be electrically connected to the conductive area 411 of the first support member 410 that is part of the ground of the electronic device 200 through the second screw fastening portion B2. In the second comparative example, a portion of the conductive area 411 of the first support member 410 corresponding to the second screw fastening portion B2 may be a grounding portion in which the intensity of an electric field is substantially zero when a radiated current is supplied to the conductive structure 72. According to an embodiment, the second screw fastening portion B2, implemented in the form of an island boss, may reduce the grounding portion compared to the second comparative example, thereby contributing to extending an area of the conductive structure 72 that operates substantially as a radiation portion.

According to an embodiment, the electronic device 200 may include a conductive material (or conductive element) positioned around an antenna radiator that includes the conductive structure 72. In an embodiment, an antenna radiator that includes the conductive structure 72 may be positioned spaced apart from a surrounding conductive material at a distance that reduces an electromagnetic effect (e.g., electromagnetic coupling, or a dielectric loss) of the surrounding conductive material. The electromagnetic effect of the surrounding conductive material on an antenna radiator may be reduced by increasing the distance that the antenna radiator and the surrounding conductive material are spaced apart, but the increase may be limited by the slimming of the electronic device 200. The distance at which the antenna radiator and the surrounding conductive material are spaced apart may be formed to improve antenna radiation performance as much as possible within these constraints. The surrounding conductive material may include, for example, a conductive material included in the display 301 and the conductive area 411 of the first support member 410, but may vary. The screw fastening portion in the form of an island boss (e.g., the first screw fastening portion B1 or the second screw fastening portion B2) may be positioned spaced apart from the display 301 to secure antenna radiation performance, for example. The screw fastening portion in the form of an island boss (e.g., the first screw fastening portion B1 or the second screw fastening portion B2) may be positioned spaced apart from the conductive area 411 of the first support member 410, for example, to secure antenna radiation performance.

According to an embodiment, in the example illustrated, the first insulating area I1 included in the non-conductive area 412 of the first support member 410 may be positioned at least partially between the first screw fastening portion B1 and the conductive area 411 of the first support member 410 (e.g., a portion of the first support member 410 included in the ground of the electronic device 200). The first insulating area I1 may insulate or physically separate the first screw fastening portion B1 and the conductive area 411 of the first support member 410. An insulating distance (or, insulating section or spacing distance) 1020 between the first screw fastening portion B1 and the conductive area 411 of the first support member 410 may be implemented by the first insulating area I1. The insulating distance 1020 may include a distance at which the first screw fastening portion B1 and the conductive area 411 of the first support member 410 are spaced apart in a direction orthogonal to a direction from the rear surface plate 202 toward the front surface plate 201 (e.g., in the +z axis direction) (e.g., in the +y axis direction in the example illustrated). The insulating distance 1020 may be provided to reduce an electromagnetic effect of the conductive area 411 of the first support member 410 on the first screw fastening portion B 1, which is a part of an antenna radiator that includes the conductive structure 72, in constraints such as, for example, the slimming of the electronic device 200.

According to an embodiment, the second insulating member 1010 may be positioned between the sixth connector 626 and the conductive structure 72. The second insulating member 1010 may be disposed in the sixth connector 626 or the conductive structure 72. The sixth connector 626 may have a conductive area that faces the conductive structure 72, and the second insulating member 1010 may physically separate the sixth connector 626 and the conductive structure 72. The sixth connector 626 may include a plurality of connector terminals and a connector housing (or connector support member) that supports the plurality of connector terminals. The connector housing may include the conductive area of the sixth connector 626 that faces the conductive structure 72. The connector housing of the sixth connector 626 may be electrically connected to a connector housing of the fourth connector 622, and the connector housing of the fourth connector 622 may be electrically connected to the ground plane included on the second printed circuit board 451. When the conductive structure 72 and the connector housing of the sixth connector 626 are in contact, a portion of the conductive structure 72 with which the connector housing of the sixth connector 626 is in contact becomes a grounding portion. Accordingly, there may be a limitation in securing an area of the conductive structure 72 that operates as a radiation portion. The second insulating member 1010 may prevent energization between the conductive structure 72 and the sixth connector 626, thereby contributing to extending an area of the conductive structure 72 that operates substantially as a radiation portion. The second insulating member 1010 may prevent energization between the sixth connector 626 and the conductive structure 72, thereby reducing degradation of antenna radiation performance for an antenna radiator that includes the conductive structure 72. The second insulating member 1010 may allow the conductive structure 72 and the sixth connector 626 to have a spacing distance therebetween, which may contribute to securing antenna radiation performance for an antenna radiator that includes the conductive structure 72. The second insulating member 1010 may have a permittivity that may contribute to not degrading antenna radiation performance to a threshold level or below for an antenna radiator that includes the conductive structure 72. The permittivity of the second insulating member 1010 may be a value that may reduce an electromagnetic effect on an antenna radiator that includes the conductive structure 72, for example.

According to some embodiments, an integrated insulating member may be formed that includes the first insulating member 910 (see FIG. 9) and the second insulating member 1010.

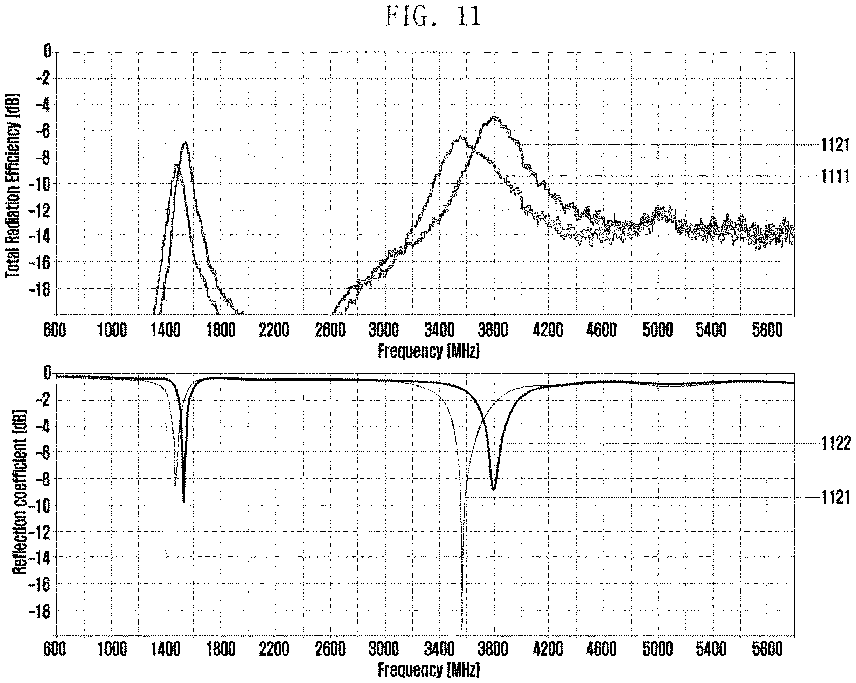

FIG. 11 is a graph illustrating antenna performance for an antenna radiator that includes the conductive structure 72 (see FIG. 8) based on a spacing distance between a screw fastening portion implemented in the form of an island boss, for example, and the conductive area 411 (see FIG. 5) of the first support member 410.

With reference to FIG. 5, the screw fastening portion implemented in the form of an island boss may be the first screw fastening portion B1 or the second screw fastening portion B2. The distance at which the first screw fastening portion and the conductive area 411 of the first support member 410 implemented in the form of an island boss (e.g., a portion of the first support member 410 included in the ground of the electronic device 200) are spaced apart may be defined or interpreted, for example, as a distance between the first edge included in the first screw fastening portion B1 and the second edge that at least partially surrounds the first edge of the conductive area 411 of the first support member 410 when viewed in the x-y top plan view in FIG. 5. The distance at which the second screw fastening portion B2 and the conductive area 411 of the first support member 410, implemented in the form of an island boss, are spaced apart may be defined or interpreted, for example, as a distance between the third edge included in the second screw fastening portion B2 and the fourth edge that at least partially surrounds the third edge of the conductive area 411 of the first support member 410, when viewed in the x-y top plan view in FIG. 5.

With reference to FIG. 11, the numerical reference "1111" is a graph representing antenna radiation performance for an antenna radiator including the conductive structure 72 when the screw fastening portion implemented in the form of an island boss and the conductive area 411 of the first support member 410 are spaced apart by a first distance (e.g., approximately 1.5 mm). Reference numeral "1112" is a graph representing a reflection coefficient for an antenna radiator including the conductive structure 72 when the screw fastening portion implemented in the form of an island boss and the conductive area 411 of the first support member 410 are spaced apart by the first distance. Reference numeral "1121" is a graph representing antenna radiation performance for an antenna radiator including the conductive structure 72 when the screw fastening portion implemented in the form of an island boss and the conductive area 411 of the first support member 410 are spaced apart by a second distance greater than the first distance (e.g., approximately 1.8 mm). Reference numeral "1122" is a graph representing a reflection coefficient for an antenna radiator including the conductive structure 72 when the screw fastening portion implemented in the form of an island boss and the conductive area 411 of the first support member 410 are spaced apart by the second distance. When the screw fastening portion implemented in the form of an island boss and the conductive area 411 of the first support member 410 are spaced apart by the second distance that is greater than the first distance, antenna performance may be improved for an antenna radiator that includes the conductive structure 72. When the screw fastening portion and the conductive area 411 of the first support member 410 implemented in the form of an island boss are spaced apart by the second distance that is greater than the first distance, an electromagnetic effect (e.g., electromagnetic coupling) between the screw fastening portion and the conductive area 411 may be reduced. When the screw fastening portion implemented in the form of an island boss and the conductive area 411 of the first support member 410 are spaced apart by the second distance that is greater than the first distance, an electric field (or electric field intensity) generated between the screw fastening portion and the conductive area 411 may be reduced. Accordingly, a resonant frequency of an antenna radiator that includes the conductive structure 72 may be shifted upward and an antenna peak value may be improved.

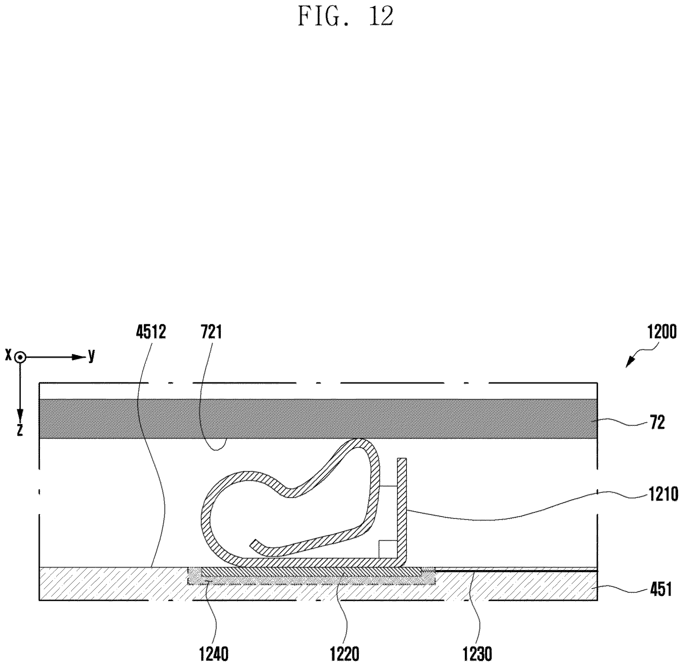

FIG. 12 illustrates a cross-sectional structure 1200 in the y-z plane illustrating the conductive structure 72, the second printed circuit board 451, and the flexible conductive member 1210, in an embodiment.

With reference to FIG. 12, the flexible conductive member 1210 may be positioned between the second surface 4512 of the second printed circuit board 451 and the third surface 721 of the conductive structure 72. The conductive structure 72 may be electrically connected to the second printed circuit board 451 through the flexible conductive member 1210. The second printed circuit board 451 may include a terminal 1220 for the disposition of the flexible conductive member 1210. The flexible conductive member 1210 may be electrically and mechanically coupled to the terminal 1220 using a conductive adhesive material (e.g., a solder). The terminal 1220 may include, for example, a copper film pad (e.g., a land).

According to an embodiment, the terminal 1220 may be electrically connected to a signal line 1230 included on the second printed circuit board 451. The communication circuit included in the electronic device 200 (e.g., the wireless communication module 192 in FIG. 1) may provide a radiated current (or an electromagnetic signal) to the signal line 1230 that is electrically connected to the terminal 1220 in which the flexible conductive member 1210 is disposed. In this case, the signal line 1230 may be referred to as a " feeding line ". The signal line 1230 is schematically illustrated, but may be provided in various forms on the second printed circuit board 451. For example, a conductive layer including the terminal 1220 of the second printed circuit board 451 may include a conductive pattern included in the signal line 1230. In another example, the signal line 1230 may include conductive patterns of different conductive layers included on the second printed circuit board 451, and at least one conductive via that electrically connects the conductive patterns. The flexible conductive member 1210, the terminal 1220, and the signal line 1230 may be defined or interpreted as part of a feeding path (or feeding line). The second printed circuit board 451 is electrically connected to the first printed circuit board 441 (see FIG. 4) through a flexible printed circuit board (e.g., the first flexible printed circuit board 810 or the second flexible printed circuit board 820 of FIG. 8), and the communication circuit disposed on the first printed circuit board 441 may provide a radiated current to the terminal 1220 on which the flexible conductive member 1210 is disposed. The conductive structure 72 may operate as an antenna radiator (or radiation portion) that radiates (or transmits) an electromagnetic signal provided (or fed) from the communication circuit to the outside, or receives an electromagnetic signal from the outside. In some embodiments, the flexible conductive member 1210 may operate as part of an antenna radiator. In some embodiments, the terminal 1220 may operate as part of an antenna radiator. The flexible conductive member 1210 may be, for example, the fifth flexible conductive member 615 or the sixth flexible conductive member 616 in FIG. 6. The position or number of feeding points on the conductive structure 72 using the flexible conductive member 1210 may vary, and the position or number of flexible conductive members corresponding to the feeding points may also vary.

According to an embodiment, the second printed circuit board 451 may include a non-conductive portion (or, non-conductive area or non-conductive layer) 1240 on which the terminal 1220 is disposed. The non-conductive portion 1240 may include, for example, a fill-cut area in which a non-conductive material is disposed (e.g., filled). The non-conductive portion 1240 may insulate or physically separate the terminal 1220 from other conductive portions (or conductive patterns) of the second printed circuit board 451 other than the signal line 1230.

According to some embodiments, the terminal 1220 may be electrically connected to at least one ground plane or ground layer included on the second printed circuit board 451. In this case, the flexible conductive member 1210, the terminal 1220, and the signal line 1230 may be defined or interpreted as a grounding path. A portion of the conductive structure 72 with which the flexible conductive member 1210 disposed at the terminal 1220 is in physical contact may be a grounding point (or grounding portion). The position or number of grounding points on the conductive structure 72 using the flexible conductive member 1210 may vary, and the position or number of flexible conductive members corresponding to the grounding points may also vary.

According to some embodiments, the terminal 1220 may be electrically connected with a switching circuit disposed on the second printed circuit board 451. In this case, a portion of the conductive structure 72 with which the flexible conductive member 1210 is in physical contact may be a switching point. The switching circuit may adjust the resonance of an antenna radiator that includes the conductive structure 72. The switching circuit (e.g., frequency adjustment circuit) may, for example, shift a resonant frequency of an antenna radiator that includes the conductive structure 72 to a designated frequency or shift the resonant frequency as much as designated. The position or number of switching points on the conductive structure 72 using the flexible conductive member 1210 may vary, and the position or number of flexible conductive members corresponding to the switching points may also vary.

According to some embodiments, the terminal 1220 may be electrically connected with a matching circuit disposed on the second printed circuit board 451. In this case, a portion of the conductive structure 72 with which the flexible conductive member 1210 disposed at the terminal 1220 is in physical contact may be referred to as a matching point. The matching circuit may match impedance of a transmission line (e.g., an electrical path through which a signal (voltage or current) of radio frequency (RF) is carried) and impedance of an antenna radiator that includes the conductive structure 72. The matching circuit may reduce reflections at a selected or designated frequency (or operating frequency) with respect to an antenna radiator that includes the conductive structure 72, for example. The matching circuit may reduce power losses through an antenna radiator that includes the conductive structure 72 at a selected or designated frequency to enable efficient signal transmission. The position or number of matching points on the conductive structure 72 using the flexible conductive member 1210 may vary, and the position or number of flexible conductive members corresponding to the matching points may also vary.

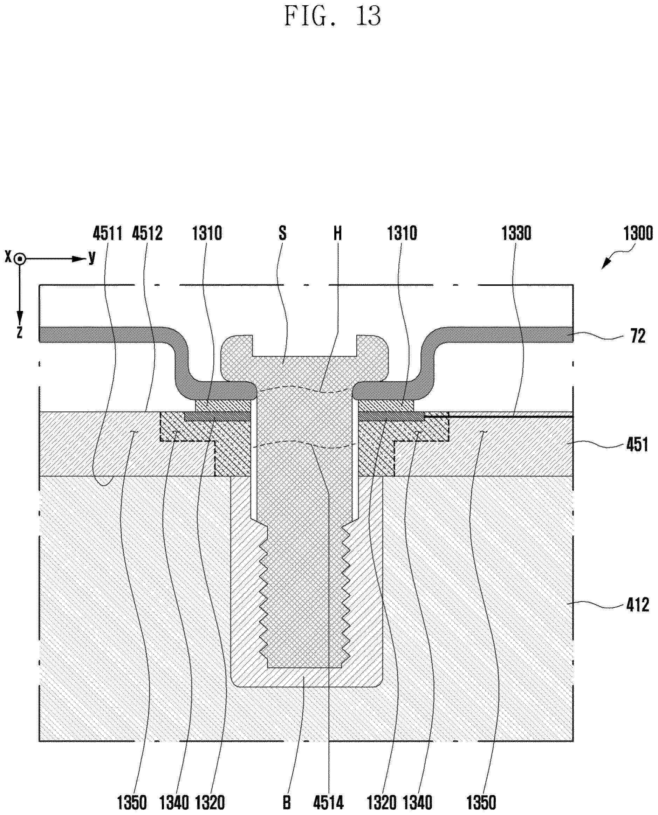

FIG. 13 illustrates a cross-sectional structure 1300 in the y-z plane illustrating the conductive structure 72, the second printed circuit board 451, a screw S and a conductive member 1310, in an embodiment.

With reference to FIG. 13, the screw S may penetrate a screw hole H of the conductive structure 72 and a screw hole 4514 of the second printed circuit board 451 and be coupled to a screw fastening portion B (e.g., a boss that includes a female screw) disposed in the non-conductive area 412 of the first support member 410 (see FIG. 5). The screw fastening portion B may be disposed in the non-conductive area 412 in the form of an island boss. The conductive member 1310 may be positioned between the conductive structure 72 and the second printed circuit board 451. The screw S may be positioned through an opening formed in the conductive member 1310. The conductive member 1310 may include, for example, a washer. The second printed circuit board 451 may include a terminal 1320 (e.g., a copper film pad) that is in physical contact with the conductive member 1310. The conductive member 1310 may include a flexible conductive material and may be in elastic contact with the conductive structure 72 and the terminal 1320 between the conductive structure 72 and the second printed circuit board 451. In some embodiments, the conductive member 1310 may include a substantially rigid conductive material. In some embodiments, the conductive structure 72 may be implemented in an integrated form that includes the conductive member 1310. The conductive structure 72, the conductive member 1310, the terminal 1320, the screw S, and the screw fastening portion B may form an electrically and mechanically connected conductive assembly. In some embodiments, the conductive member 1310 may be omitted, and the conductive structure 72 may be in physical contact with the terminal 1320.

According to an embodiment, a structure in which the conductive structure 72 and the second printed circuit board 452 are electrically connected through the fifth flexible conductive member 615 (see FIG. 6) may be replaced by a structure in which the conductive structure 72 and the second printed circuit board 452 are electrically connected using the screw fastening portion B in the form of an island boss, the screw S, and the conductive member 1310 according to the example in FIG. 13.

According to an embodiment, a structure in which the conductive structure 72 and the second printed circuit board 452 are electrically connected through the sixth flexible conductive member 616 (see FIG. 6) may be replaced by a structure in which the conductive structure 72 and the second printed circuit board 452 are electrically connected using the screw fastening portion B in the form of an island boss, the screw S, and the conductive member 1310 according to the example in FIG. 13.

According to various embodiments, the structure of electrically connecting the conductive structure 72 to the second printed circuit board 452 using the screw fastening portion B in the form of an island boss, the screw S, and the conductive member 1310 may be implemented in various positions or numbers, according to the example in FIG. 13. According to an embodiment, the terminal 1320 may be electrically connected to a signal line 1330 included on the second printed circuit board 451. The communication circuit included in the electronic device 200 (e.g., the wireless communication module 192 in FIG. 1) may provide a radiated current (or an electromagnetic signal) to the signal line 1330 that is electrically connected to the terminal 1320. In this case, the signal line 1330 may be referred to as a " feeding line ". The signal line 1330 is schematically illustrated, but may be provided in various forms on the second printed circuit board 451. For example, a conductive layer including the terminal 1320 of the second printed circuit board 451 may include a conductive pattern included in the signal line 1330. In another example, the signal line 1330 may include conductive patterns of different conductive layers included on the second printed circuit board 451, and at least one conductive via that electrically connects the conductive patterns. The second printed circuit board 451 is electrically connected to the first printed circuit board 441 (see FIG. 4) through a flexible printed circuit board (e.g., the first flexible printed circuit board 810 or the second flexible printed circuit board 820 of FIG. 8), and the communication circuit disposed on the first printed circuit board 441 may provide a radiated current to the terminal 1320. An antenna radiator including the conductive structure 72 may operate as an antenna radiator (or radiation portion) that radiates (or transmits) an electromagnetic signal provided (or fed) from the communication circuit to the outside, or receives an electromagnetic signal from the outside. In some embodiments, the conductive member 1310 may operate as part of an antenna radiator. In some embodiments, the screw S may operate as part of an antenna radiator. In some embodiments, the screw fastening portion B may operate as part of an antenna radiator. In some embodiments, a conductive assembly including the conductive structure 72, the conductive member 1310, the terminal 1320, the screw S, and the screw fastening portion B may operate as a radiator. In some embodiments, a portion of the conductive assembly that includes the conductive structure 72, the conductive member 1310, the terminal 1320, the screw S, and the screw fastening portion B may operate as a radiator (or antenna radiation portion) that substantially radiates (or transmits) an electromagnetic signal to the outside, or receives an electromagnetic signal from the outside. The position or number of conductive assemblies including the conductive structure 72, the conductive member 1310, the terminal 1320, the screw S, and the screw fastening portion B may vary.

According to some embodiments, the second printed circuit board 451 may further include a non-conductive first area 1340 (e.g., a non-conductive portion, a non-conductive area, or a non-conductive layer) in which the terminal 1320 is disposed. The first area 1340 may include, for example, a fill-cut area in which a non-conductive material is disposed (e.g., filled). The first area 1340 may insulate or physically separate the terminal 1320 from other conductive portions (or conductive patterns) of the second printed circuit board 451 other than the signal line 1330. The first area 1340 may provide the screw hole 4514 of the second printed circuit board 451. The second printed circuit board 451 may include a second area 1350 that surrounds the first area 1340, when viewed from above the second surface 4512 (e.g., when viewed in the +z axis direction). The second area 1350 may include a conductive pattern (or circuit pattern), such as a ground plane. The first area 1340 may insulate or physically separate the screw S from a conductive pattern, such as a ground plane, included in the second area 1350.

According to an embodiment, the first area 1340 may face the screw fastening portion B implemented in the form of an island boss. The first area 1340 may be in the form of an extension from the second surface 4512 of the second printed circuit board 451 that faces the conductive structure 72 to the first surface 4511 of the second printed circuit board 451 that faces the non-conductive area 412 of the first support member 410. The first area 1340 may include one surface (e.g., a fifth surface) disposed in a direction in which the first surface 4511 of the second printed circuit board 451 faces (e.g., in the -z axis direction) and the other surface (e.g., a sixth surface) disposed in a direction in which the first surface 4511 of the second printed circuit board 451 faces (e.g., in the +z axis direction). In the example illustrated, the fifth side may be a portion of the first surface 4511 and the sixth side may be a portion of the second surface 4512. In a structure in which the conductive structure 72 of the second support member 420 (see FIG. 7), the second printed circuit board 451, and the non-conductive area 412 of the first support member 410 (see FIG. 5) are coupled using the screw S, the screw fastening portion B may be in physical contact with the second printed circuit board 451 to reduce or prevent electrical connection with the second printed circuit board 451. For example, the second printed circuit board 451 may include a ground plane exposed to the first surface 4511 that faces the non-conductive area 412 of the first support member 410. Since the ground plane may be implemented to be disposed in the second area 1350 around the first area 1340, energization between the screw fastening portion B and the ground plane of the second printed circuit board 451 may be prevented.

According to some embodiments, the first area 1340 may be provided in the form in which a non-conductive material is coated on an inner surface of the screw hole 4514 of the second printed circuit board 451. In this case, the first area 1340 may include a coating layer of thinner thickness compared to the example illustrated.

According to some embodiments, the first area 1340 may be provided as a separate non-conductive member (or non-conductive structure) and coupled to the second printed circuit board 451 (e.g., coupled in a fitting method). An adhesive material may be disposed between the first area 1340 and the second printed circuit board 451.

According to some embodiments, depending on a circuit structure (or, circuit form or circuit disposition structure) included in a portion of the second printed circuit board 451 corresponding to the screw fastening portion B, the first area 1340 may be provided in various other forms to prevent energization between the screw B and the circuit structure, without limitation to the example illustrated. For example, it may be interpreted that, unlike the example illustrated, the fifth surface of the first area 1340 (e.g., a surface disposed in a direction in which the first surface 4511 of the second printed circuit board 451 faces) may be positioned inside the second printed circuit board 451 and is not included on the first surface 4511.

According to some embodiments, the first area 1340 may be provided in the form of a protrusion with respect to the first surface 4511 of the second printed circuit board 451.

According to some embodiments, a male thread of the screw S may extend into the first area 1340, and an inner surface of the first area 1340 may further include a corresponding female thread.

According to some embodiments, the terminal 1320 may be electrically connected to at least one ground plane or ground layer included on the second printed circuit board 451.

According to some embodiments, the terminal 1320 may be electrically connected with a switching circuit disposed on the second printed circuit board 451. The switching circuit may adjust the resonance of an antenna radiator that includes the conductive structure 72. The switching circuit (e.g., frequency adjustment circuit) may, for example, shift a resonant frequency of an antenna radiator that includes the conductive structure 72 to a designated frequency or shift the resonant frequency as much as designated.

According to some embodiments, the terminal 1320 may be electrically connected with a matching circuit disposed on the second printed circuit board 451. The matching circuitry may match impedance of a transmission line and impedance of an antenna radiator that includes the conductive structure 72. The matching circuit may reduce reflections at a selected or designated frequency (or operating frequency) with respect to an antenna radiator that includes the conductive structure 72, for example. The matching circuit may reduce power losses through an antenna radiator that includes the conductive structure 72 at a selected or designated frequency to enable efficient signal transmission.

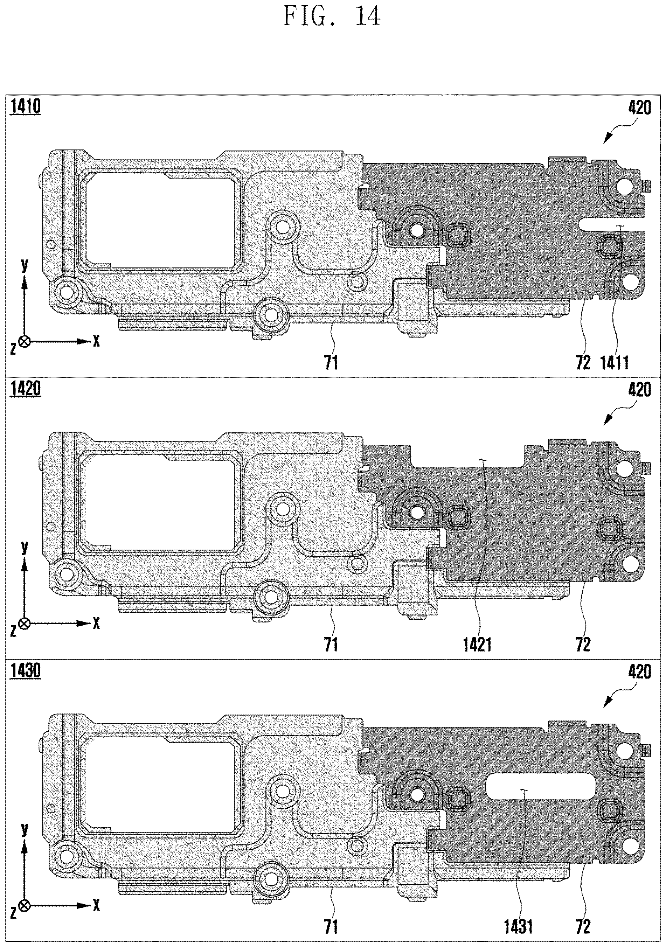

FIG. 14 is an x-y top plan view of the second support member 420, in various embodiments.

Referring now to FIG. 14, the conductive structure 72 may be modified and implemented in a form different from the example in FIG. 7 in order to adjust a resonant frequency. For example, the conductive structure 72 included in the second support member 420 indicated by reference numeral "1410" or the conductive structure 72 included in the second support member 420 indicated by reference numeral "1420" may further include an opening 1411 or 1421 in the form of a notch, compared to the conductive structure 72 in FIG. 7. For example, the conductive structure 72 included in the second support member 420, indicated by reference numeral "1430," may further include an opening in the form of a through-hole, compared to the conductive structure 72 in FIG. 7.

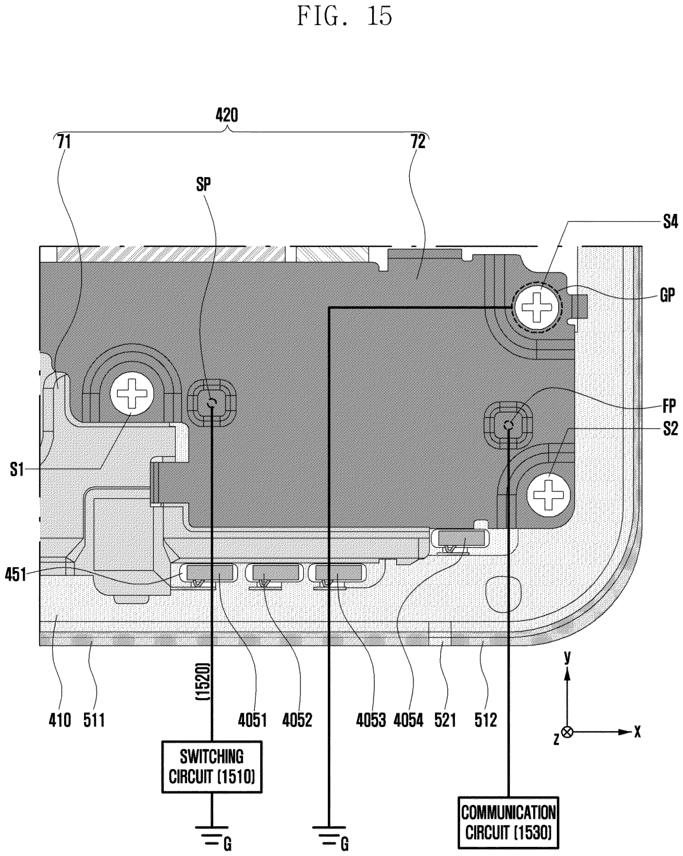

FIG. 15 is an x-y top plan view of the electronic device 200, in an embodiment.

With reference to FIG. 15, a feeding point FP on the conductive structure 72 of the second support member 420 may be electrically connected with a communication circuit 1530 (e.g., the wireless communication module 192 in FIG. 1). A radiated current (or electromagnetic signal) from the communication circuit 1530 may be provided to the conductive structure 72 through the feeding point FP. The feeding point FP may be, for example, a portion of the conductive structure 72 that is in contact with the sixth flexible conductive member 616 (see FIG. 6) disposed on the second printed circuit board 451.

According to an embodiment, a grounding point GP on the conductive structure 72 may be electrically connected to a ground G of the electronic device 200. The grounding point GP may be, for example, a portion of the conductive structure 72 corresponding to the fourth screw S4. The conductive structure 72 may be electrically connected to the conductive area 411 (see FIG. 5) of the first support member 410, which is included in the ground G of the electronic device 200, through the fourth screw S4 and the fourth screw fastening portion B4 (see FIG. 5).

According to an embodiment, a switching point (SP) on the conductive structure 72 may be electrically connected to the switching circuit 1510 disposed on the second printed circuit board 451. The switching circuit 1510 may be disposed in or electrically connected to an electrical path 1520 that electrically connects the switching point SP to the ground G of the electronic device 200. The switching point SP may be electrically connected to the ground G of the electronic device 200 via the switching circuit 1510. The switching point SP may be, for example, a portion of the conductive structure 72 that is in contact with the fifth flexible conductive member 615 (see FIG. 6) disposed on the second printed circuit board 451. The electrical path 1520 may include the fifth flexible conductive member 615 (see FIG. 6) disposed on the second printed circuit board 451 and wiring included on the second printed circuit board 451. The switching circuit 1510 may be disposed on the second printed circuit board 451. The switching circuit 1510 may adjust the resonance of an antenna radiator that includes the conductive structure 72. The switching circuit 1510 may include a frequency adjustment circuit and may, for example, shift a resonant frequency of an antenna radiator that includes the conductive structure 72 to a designated frequency or shift the resonant frequency as much as designated. The switching circuit 1510 may include an electrical element, such as a lumped element or a passive element. Hereinafter, in the embodiment of FIG. 15, an antenna radiator including the conductive structure 72, the ground G of the electronic device 200, the communication circuit 1530, and the switching circuit 1510 may be collectively referred to as an antenna (or antenna device, or antenna system). A processor (e.g., the processor 120 in FIG. 1) may control the switching circuit 1510 in response to a used frequency band (or an operating frequency band), and according to the control, an element value (e.g., inductance or capacitance) at which the switching circuit 1510 acts on (or affects) an antenna may be adjusted. For example, an effect of the ground G of the electronic device 200 on the conductive structure 72 (or antenna ground effect) may vary according to the element value at which the switching circuit 1510 acts. Therefore, resonant characteristics (e.g., a resonant frequency) of an antenna radiator that includes the conductive structure 72 may vary.

According to various embodiments, the switching circuit 1510 includes, or may be interpreted as, a matching circuit (e.g., a tunable matching circuit) that is variable with one or more elements connected in one or more electrical paths. The switching circuit 1510 may include, for example, a matching circuit that includes one or more switches, elements, or any possible combination thereof. As a matching circuit, the switching circuit 1510 may adjust a resonant frequency of an antenna radiator including the conductive structure 72, or may match impedance of a transmission line and impedance of an antenna radiator including the conductive structure 72.

According to various embodiments, the position or number of feeding points on the conductive structure 72, the position or number of grounding points on the conductive structure 72, or the position or number of switching points on the conductive structure 72 may vary, without limitation to the example illustrated.

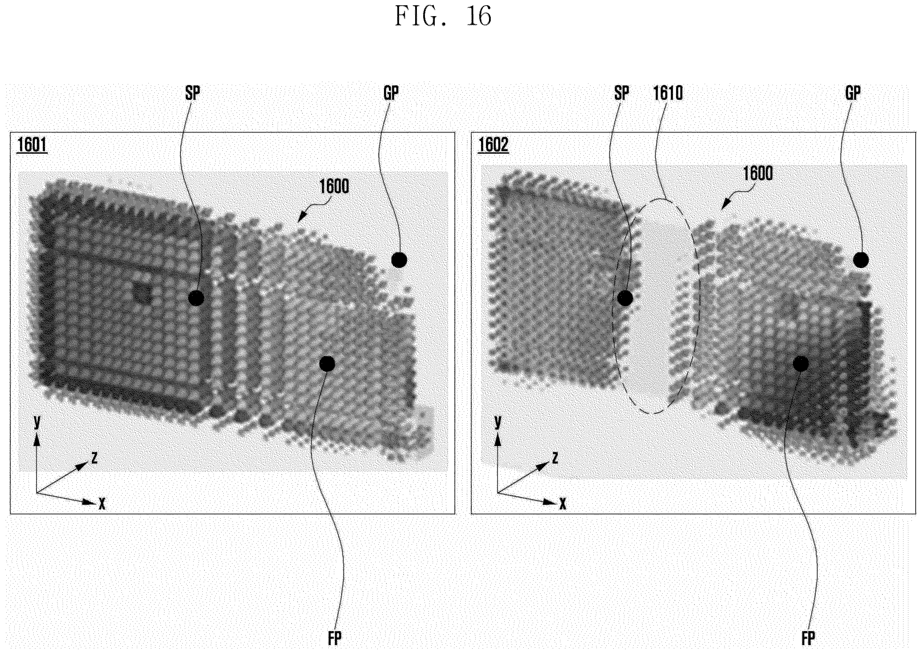

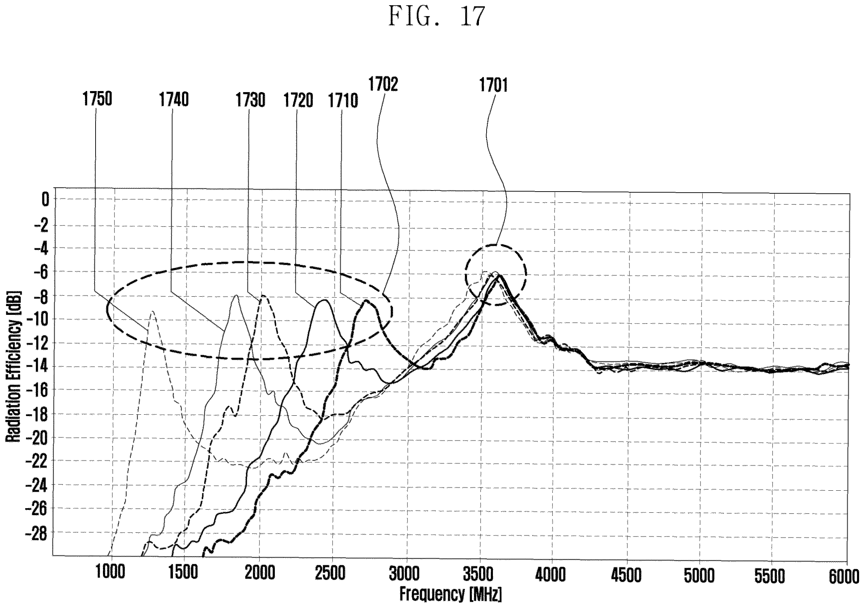

FIG. 16 illustrates, for example, electric field distribution for a mode formed by a structure 1600. FIG. 17 is a graph illustrating antenna radiation performance according to an element value that the switching circuit 1510 (see FIG. 15) acts on an antenna, for example.

A mode may be defined or interpreted as the form in which energy is concentrated in some structure. Taking an antenna (or antenna radiator) as an example, an antenna is a structure that radiates energy to the surroundings when a resonance occurs at a specific frequency, and a mode (or, eigenmode or resonant mode) may be a way of expressing what form the energy radiates in. A structure may have at least one mode corresponding to a natural frequency according to properties of the structure, such as, a shape, material, or density. The direction of the electric and magnetic fields, and the form in which the energy is radiated, may vary depending on the mode. The waves resonating in the structure may include, for example, a wave related to a first resonance at a first natural frequency, a wave related to a second resonance at a second natural frequency higher than the first natural frequency, or a wave related to a resonance at a higher natural frequency. With reference to FIG. 16, reference numeral "1601" represents electric field distribution formed in the structure 1600 in mode 1 corresponding to the first natural frequency (e.g., the first resonance). Reference numeral "1602" represents electric field distribution formed in the structure 1600 in mode 2 corresponding to the second natural frequency (e.g., the second resonance). The electric field distribution in mode 1 and the electric field distribution in mode 2 may be different. The structure 1600 may be understood as, for example, the conductive structure 72 used as an antenna radiator in the present disclosure, and a position of a feeding point or a position of a switching point on the structure 1600 may be determined using the electric field distribution of mode 1 and the electric field distribution of mode 2 based on the properties of the structure 1600.

In a first example, based on mode 1 and mode 2, the feeding point on the structure 1600 may be positioned in correspondence to a null area in mode 1 and may be positioned in correspondence to a null area 1610 in mode 2. The first example may be interpreted as a feeding method that can be implemented such that, when a radiated current is provided to the structure 1600 through the feeding point, a resonance related to mode 1 and a resonance related to mode 2 are not formed. A null area (or null point) of a mode may be a part of electric field distribution where an electric field (or electric field strength) is substantially zero. A null area of a mode may correspond to an invalid area in which it is not possible to radiate or detect radio waves.

In a second example, based on mode 1 and mode 2, the feeding point FP on the structure 1600 may be positioned in correspondence to an area that is not a null area (hereinafter referred to as a non-null area) in mode 1 and in correspondence to a non-null area in mode 2. The second example may be interpreted as a feeding method that can be implemented such that, when a radiated current is provided to the structure 1600 through the feeding point, a resonance related to mode 1 and a resonance related to mode 2 are formed.

In a third example, based on mode 1 and mode 2, the feeding point on the structure 1600 may be positioned in correspondence to a non-null area in mode 1 and may be positioned in correspondence to the null area 1610 in mode 2. The first example may be interpreted as a feeding method that can be implemented such that, when a radiated current is provided to the structure 1600 through the feeding point, a resonance related to mode 1 is formed and a resonance related to mode 2 is not formed.

In a fourth example, based on mode 1 and mode 2, the feeding point on the structure 1600 may be positioned in correspondence to a null area in mode 1 and may be positioned in correspondence to a non-null area in mode 2. The fourth example may be interpreted as a feeding method that can be implemented such that, when a radiated current is provided to the structure 1600 through the feeding point, a resonance related to mode 1 is not formed and a resonance related to mode 2 are formed.

In a fifth example, based on mode 1 and mode 2, the switching point on the structure 1600 may be positioned in correspondence to a null area in mode 1 and may be positioned in correspondence to the null area 1610 in mode 2. The fifth example may be interpreted as a frequency adjustment method that may be implemented such that, when a radiated current is provided to the structure 1600, the element value (e.g., inductance or capacitance) of the switching circuit 1510 (see FIG. 15) does not substantially affect the resonance related to mode 1 and the resonance related to mode 2.

In a sixth example, based on mode 1 and mode 2, the switching point on the structure 1600 may be positioned in correspondence to a non-null area in mode 1 and may be positioned in correspondence to a non-null area in mode 2. The sixth example may be interpreted as a frequency adjustment method that may be implemented such that, when a radiated current is provided to the structure 1600, the element value of the switching circuit 1510 (see FIG. 15) affect the resonance related to mode 1 and the resonance related to mode 2.

In a seventh example, based on mode 1 and mode 2, the switching point SP on the structure 1600 may be positioned in correspondence to a non-null area in mode 1 and may be positioned in correspondence to a null area in mode 2. The seventh example may be interpreted as a frequency adjustment method that may be implemented such that, when a radiated current is provided to the structure 1600, the element value of the switching circuit 1510 (see FIG. 15) affect the resonance related to mode 1 and does not substantially affect the resonance related to mode 2.

In an eighth example, based on mode 1 and mode 2, the switching point on the structure 1600 may be positioned in correspondence to a null area in mode 1 and may be positioned in correspondence to a non-null area in mode 2. The eighth example may be interpreted as a frequency adjustment method that may be implemented such that, when a radiated current is provided to the structure 1600, the element value of the switching circuit 1510 (see FIG. 15) does not substantially affect the resonance related to mode 1 and affect the resonance related to mode 2.

FIG. 17 relates to the seventh example, in which antenna radiation performance may vary according to the element value of the switching circuit 1510. Reference numeral "1710" is a graph illustrating antenna radiation performance when the element value that the switching circuit 1510 (see FIG. 15) acts on an antenna is a capacitor of approximately 100 pF (picofarad). Reference numeral "1720" is a graph illustrating antenna radiation performance when the element value that the switching circuit 1510 acts on an antenna is an inductance of approximately 1 nH (nanohenry). Reference numeral "1730" is a graph illustrating antenna radiation performance when the element value that the switching circuit 1510 acts on an antenna is an inductance of approximately 2.2 nH. Reference numeral "1740" is a graph illustrating antenna radiation performance when the element value that the switching circuit 1510 acts on an antenna is an inductance of approximately 3.9 nH. Reference numeral "1750" is a graph illustrating antenna radiation performance when the element value that the switching circuit 1510 acts on an antenna is a capacitance of approximately 1.5 pF. Since the switching point SP corresponding to the switching circuit 1510 is positioned in correspondence to the null area 1610 of mode 2 even if the element value that the switching circuit 1510 acts on an antenna is adjusted, the resonant frequency related to mode 2 may have a change of less than a threshold difference or remain substantially unchanged (see reference numeral "1701"). Since the switching points SP corresponding to the switching circuit 1510 are positioned in correspondence to a non-null area of mode 1, the switching circuit 1510 may affect the resonance related to mode 1, so that the resonant frequency related to mode 1 may change when the element value of the switching circuit 1510 is adjusted (see reference numeral "1702"). The frequency adjustment method according to the seventh example may facilitate frequency adjustment in an antenna having a plurality of operating bands. The frequency adjustment method described with reference to FIGS. 16 and 17 is not limited to being based on mode 1 and mode 2, but may be implemented based on higher-order modes beyond mode 1 and mode 2.

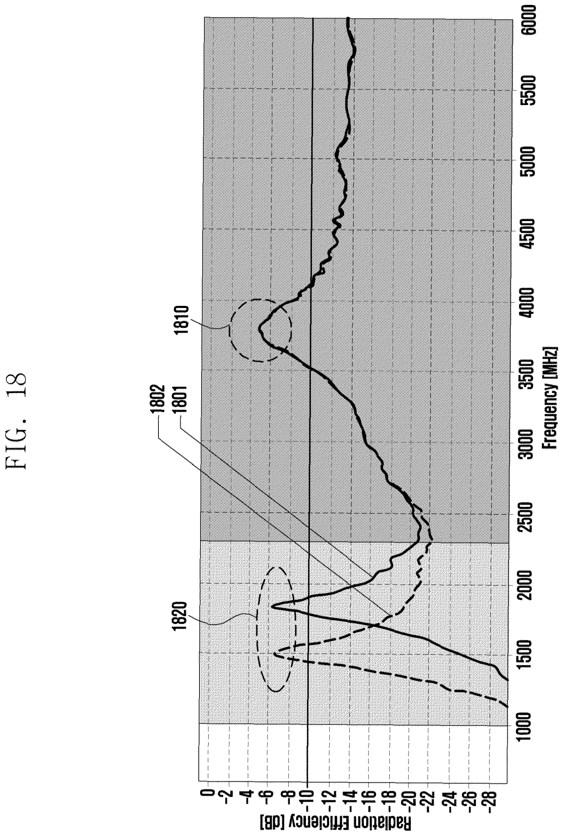

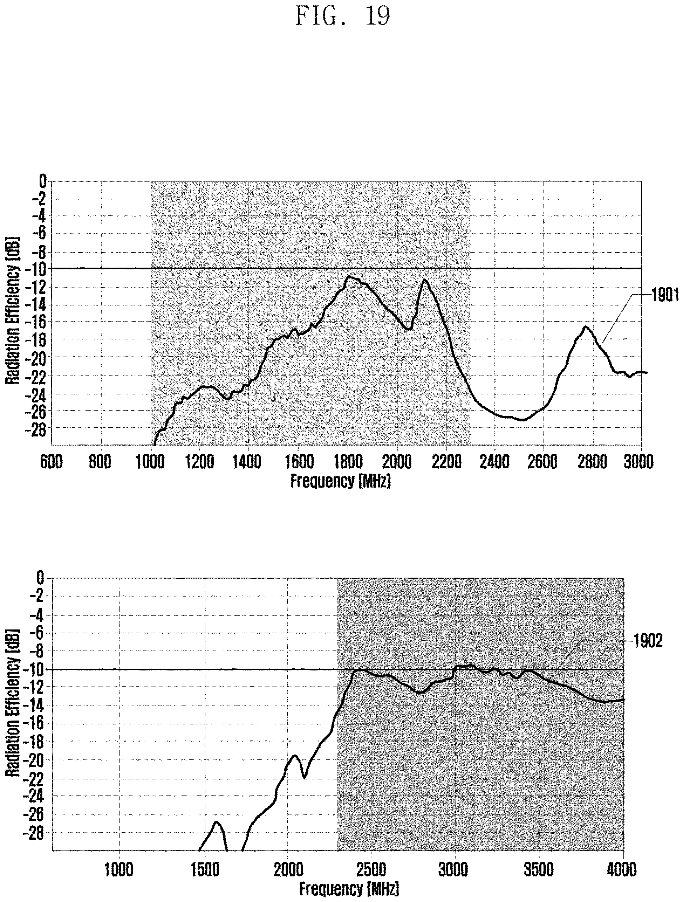

FIG. 18 is a graph illustrating antenna radiation performance for an antenna included in the electronic device 200, for example. FIG. 19 is a graph illustrating antenna radiation performance for an antenna included in an electronic device according to a comparative example, for example.

According to an embodiment, an antenna included in the electronic device 200 may be an antenna that includes an antenna radiator including the conductive structure 72, the ground G of the electronic device 200, the communication circuit 1530, and the switching circuit 1510, according to the embodiment in FIG. 15. The electronic device according to the comparative example may include, for example, an integrated non-conductive support member and a conductive pattern disposed on a surface facing the rear surface plate 202 (see FIG. 10) of the integrated non-conductive support member, replacing the second support member 420 (see FIG. 10) according to an embodiment. In the electronic device according to the comparative example, the conductive pattern may be electrically connected to the communication circuit to operate as an antenna radiator. An antenna included in the electronic device according to the comparative example may be using the conductive pattern disposed on the integrated non-conductive support member as an antenna radiator.

A processor (e.g., the processor 120 in FIG. 1) included in the electronic device 200 may control the switching circuit 1510 in response to a used frequency band (or an operating frequency band), and according to the control, an element value at which the switching circuit 1510 acts on (or affects) an antenna may be adjusted. With reference to FIG. 18, reference numeral " 1801" is a graph illustrating antenna radiation performance for an antenna when the switching circuit 1510 (see FIG. 15) applies a first element value to an antenna according to control of the processor. Reference numeral "1802" is a graph illustrating antenna radiation performance for an antenna when the switching circuit 1510 applies a second element value different from the first element value to an antenna, according to control of the processor. In the electronic device 200 according to an embodiment, even if the element value of the switching circuit 1510 acting on an antenna is adjusted, the switching point SP corresponding to the switching circuit 1510 is positioned in correspondence to a null area of mode 2 (e.g., the null area 1610 in FIG. 16), so that the resonant frequency related to mode 2 may have less than a threshold difference or remain substantially unchanged (see reference numeral "1810"). Since the switching points SP corresponding to the switching circuit 1510 are positioned in correspondence to a non-null area of mode 1, the switching circuit 1510 may affect the resonance related to mode 1, so that the resonant frequency related to mode 1 may change when the element value of the switching circuit 1510 is adjusted (see reference numeral "1820"). With reference to FIG. 19, reference numeral "1901" is a graph illustrating antenna radiation performance for an antenna included in the electronic device according to the comparative example implemented for a first used frequency band (e.g., MB). Reference numeral "1902" is a graph illustrating antenna radiation performance for an antenna included in the electronic device according to the comparative example implemented for a second used frequency band (e.g., HB or UHB). With reference to FIGS. 18 and 19, an antenna included in the electronic device 200 according to an embodiment may have improved antenna radiation performance in the first used frequency band and/or the second used frequency band compared to an antenna included in the electronic device according to the comparative example, with respect to approximately -10 dB. An embodiment of the present disclosure may reduce the size or volume of a dielectric material (e.g., a non-conductive support member of a comparative example) that may have an effect on an electromagnetic field formed by an antenna radiator that includes the conductive structure 72, compared to the comparative example. An embodiment of the present disclosure may facilitate securing an air gap AG having a permittivity that may reduce an effect on an electromagnetic field formed by an antenna radiator in a slimmed space of the electronic device 200, compared to the comparative example. Accordingly, an embodiment of the present disclosure may reduce a dielectric loss and thus have improved antenna radiation performance or coverage compared to the comparative example.

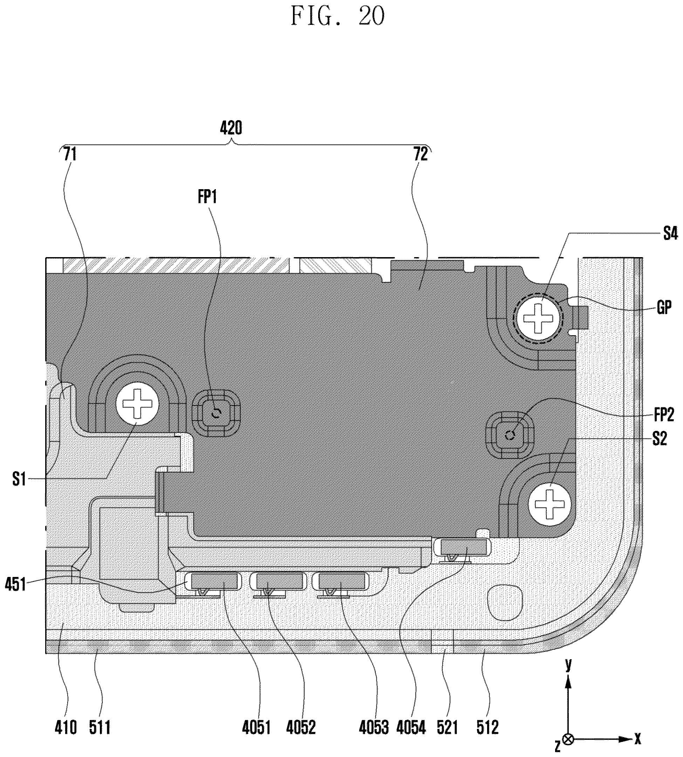

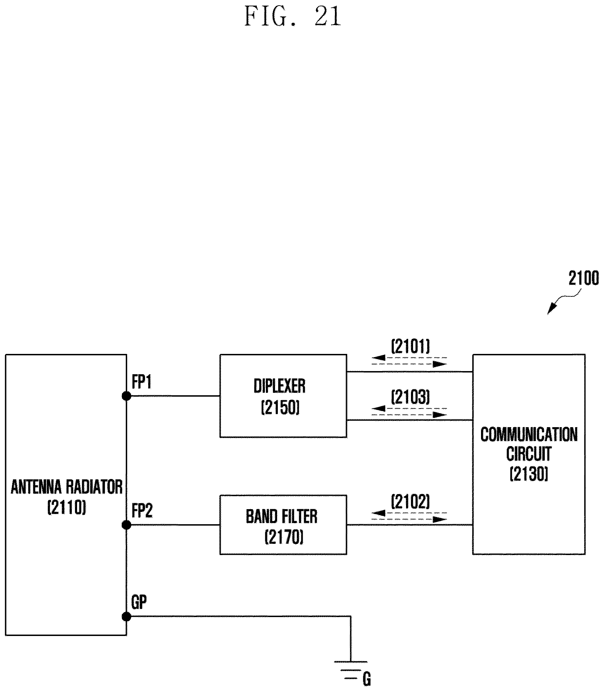

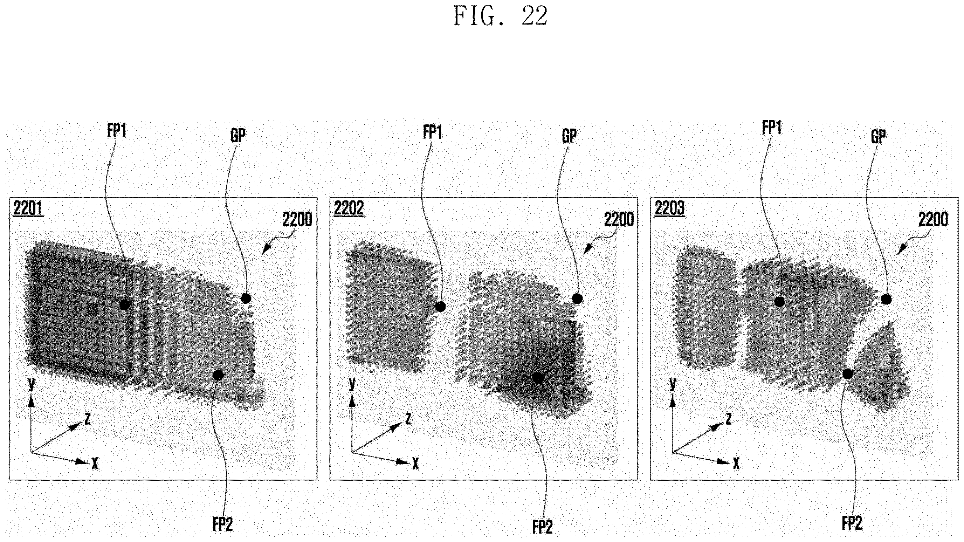

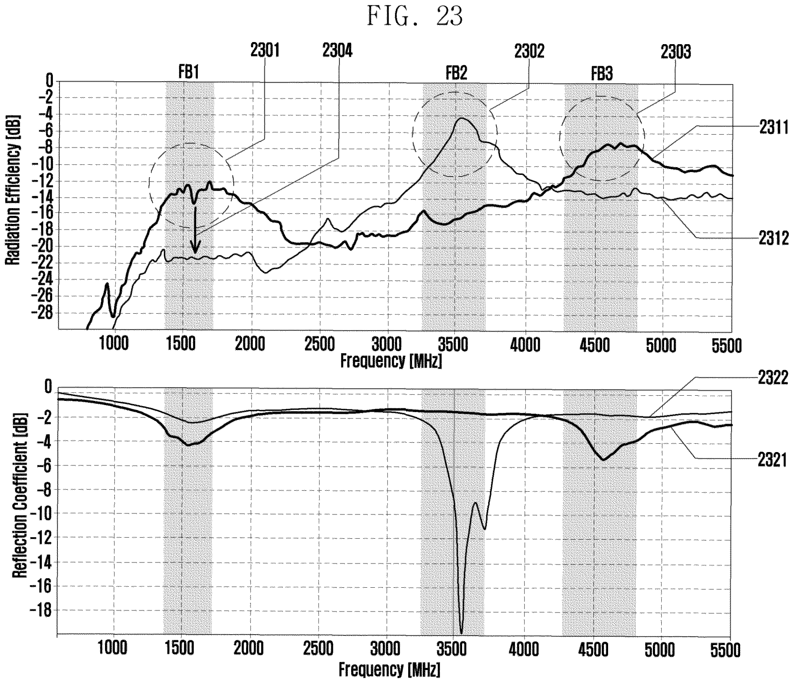

FIG. 20 is an x-y top plan view of the electronic device 200, in an embodiment. FIG. 21 is a block diagram of an antenna device (or antenna system) 2100 included in the electronic device 200, in an embodiment. FIG. 22 illustrates, for example, electric field distribution for a mode formed by a structure 2200. FIG. 23 is a graph illustrating antenna radiation performance for an antenna device 2100 in FIG. 21 and a graph illustrating a reflection coefficient for the antenna device 2100 in FIG. 21, in an embodiment.

With reference to FIGS. 20 and 21, the electronic device 200 may include an antenna radiator 2110 including the conductive structure 72, a ground G, a communication circuit 2130, a diplexer 2150, and/or a filter 2170.

According to an embodiment, the communication circuit 2130 (e.g., the wireless communication module 192 in FIG. 1) may be electrically connected with a first feeding point FP1 and a second feeding point FP2 of the antenna radiator 2110. The first feeding point FP1 may be, for example, a portion of the conductive structure 72 that is in contact with the fifth flexible conductive member 615 (see FIG. 6) disposed on the second printed circuit board 451. The second feeding point FP2 may be, for example, a portion of the conductive structure 72 that is in contact with the sixth flexible conductive member 616 (see FIG. 6) disposed on the second printed circuit board 451. A radiated current (or electromagnetic signal) from the communication circuit 2130 may be provided to the antenna radiator 2110, which includes the conductive structure 72, through the first feeding point FP1 and/or the second feeding point FP2. The feeding point may be a portion of the conductive structure 72 where the intensity of an electric field is maximized when a radiated current is supplied to the conductive structure 72, or a portion of the conductive structure 72 where the intensity of the electric field is relatively large. The electronic device 200 may include a first transmission line (or first RF chain) and a second transmission line (or second RF chain) that connect the antenna radiator 2110 and the communication circuit 2130. The diplexer 2150 may be disposed in the first transmission line, and the filter 2170 may be disposed in the second transmission line.

According to an embodiment, the ground G of the electronic device 200 may be electrically connected to a grounding point GP of the antenna radiator 2110. The grounding point GP may be, for example, a portion of the conductive structure 72 corresponding to the fourth screw S4. The conductive structure 72 may be electrically connected to the conductive area 411 (see FIG. 5) of the first support member 410, which is included in the ground G, through the fourth screw S4 and the fourth screw fastening portion B4 (see FIG. 5). The grounding point (GP) may be a portion of the conductive structure 72 where the intensity of an electric field is substantially zero when a radiated current is supplied to the conductive structure 72.

With reference to FIG. 22, reference numeral "2201" represents electric field distribution formed in the structure 2200 in mode 1 corresponding to a first natural frequency (e.g., a first resonance). Reference numeral "2202" represents electric field distribution formed in the structure 2200 in mode 2 corresponding to a second natural frequency higher than the first natural frequency (e.g., a second resonance). Reference numeral "2203" represents electric field distribution formed in the structure 2200 in mode 3 corresponding to a third natural frequency higher than the second natural frequency (e.g., a third resonance). The electric field distribution of mode 1, the electric field distribution of mode 2, and the electric field distribution of mode 3 may be different from each other. The structure 2200 may be understood as, for example, the conductive structure 72 used as an antenna radiator in the present disclosure, and the position of the feeding point on the structure 2200 may be determined using the electric field distribution of mode 1, the electric field distribution of mode 2, and the electric field distribution of mode 3 based on the properties of the structure 2200. A "mode" may be a form of concentration of energy of a specific frequency in the structure 2200. A "mode" may be a form in which a radiated current is structurally concentrated in a specific area of the structure 200 in a specific frequency band. In an embodiment, a method of forming dual feeds (e.g., the first feeding point FP1 and the second feeding point FP2) for a single antenna radiator 2110 using a difference in electric field distribution by mode and a null area of the electric field distribution may be implemented.

With reference to FIG. 23, reference numeral "2311" is a graph representing antenna radiation performance for the antenna 2100 in correspondence to the first transmission line, and reference numeral "2312" is a graph representing antenna radiation performance for the antenna 2100 in correspondence to the second transmission line. Reference numeral 2321 is a graph representing a reflection coefficient for the antenna 2100 in correspondence to the first transmission line. Reference numeral 2322 is a graph representing a reflection coefficient for the antenna 2100 in correspondence to the second transmission line. The antenna 2100 may form a resonance in a first frequency band FB1 (see reference numeral "2301"), a resonance in a second frequency band FB2 (see reference numeral "2302"), and a resonance in a third frequency band FB3 (see reference numeral "2303"). The communication circuit 2130 may transmit and/or receive a first electromagnetic signal 2101 included in the first frequency band FB1, a second electromagnetic signal 2102 included in the second frequency band FB2, and/or a third electromagnetic signal 2103 included in the third frequency band FB3 through the antenna radiator 2110.

According to an embodiment, based on mode 1, mode 2, and mode 3, the first feeding point FP1 on the structure 2200 may be positioned in correspondence to a non-null area in mode 1, positioned in correspondence to a null area in mode 2, and positioned in correspondence to a non-null area in mode 3. A method of determining the position of the first feeding point FP1 based on mode 1, mode 2, and mode 3 may be interpreted as a feeding method that may be implemented such that, when a radiated current is provided to the structure 1600 through the first feeding point FP1, a first resonance related to mode 1 and a third resonance related to mode 3 are formed and a second resonance related to mode 2 is not formed. The communication circuit 2130 may transmit and/or receive the first electromagnetic signal 2101 in the first frequency band FB1 for the first resonance and the third electromagnetic signal 2103 in the third frequency band FB3 for the third resonance through the antenna radiator 2110. The diplexer 2150 disposed in the first transmission line connecting the antenna radiator 2110 to the communication circuit 2130 may include a filter element for branching used to simultaneously transmit and receive electromagnetic signals of different frequency bands, and may include, for example, a low-pass filter (LPF) and/or a highpass filter (HPF). The diplexer 2150 may provide the first electromagnetic signal 2101 in the first frequency band FB1 and the third electromagnetic signal 2103 in the third frequency band FB3 output from the communication circuit 2130 to the antenna radiator 2110 in such a way that the first electromagnetic signal 2101 and the third electromagnetic signal 2103 substantially do not affect each other. The diplexer 2150 may provide the first electromagnetic signal 2101 in the first frequency band FB1 and the third electromagnetic signal 2103 in the third frequency band FB3 received through the antenna radiator 2110 from the outside of the electronic device 200 to the communication circuit 2130 in such a way that the first electromagnetic signal 2101 and the third electromagnetic signal 2103 substantially do not affect each other.

According to an embodiment, based on mode 1, mode 2, and mode 3, the second feeding point FP2 on the structure 2200 may be positioned in correspondence to a non-null area in mode 1, positioned in correspondence to a non-null area in mode 2, and positioned in correspondence to a null area in mode 3. A method of determining the second feeding point FP2 based on mode 1, mode 2, and mode 3 may be interpreted as a feeding method that may be implemented such that, when a radiated current is provided to the structure 1600 through the second feeding point FP2, a first resonance related to mode 1 and a second resonance related to mode 2 are formed and a third resonance related to mode 3 is substantially not formed. The filter 2170 disposed in the second transmission line connecting the antenna radiator 2110 to the communication circuit 2130 may select a frequency component in a specific band. The filter 2170 may ensure that a resonance in the first frequency band FB1 is substantially not formed (see reference numeral '2304'). The filter 2170 may allow the communication circuit 2130 to transmit and/or to receive, through the antenna radiator 2110, the second electromagnetic signal 2102 among the first electromagnetic signal 2101 in the first frequency band FB1 for the first resonance and the second electromagnetic signal 2102 in the second frequency band FB2 for the second resonance. When the first electromagnetic signal 2101 in the first frequency band FB1 for the first resonance and the second electromagnetic signal 2102 in the second frequency band FB2 for the second resonance are received from the outside of the electronic device 200 through the antenna radiator 2110, the filter 2170 may ensure that the first electromagnetic signal 2101 in the first frequency band FB1 is substantially not transmitted to the communication circuit 2130. The filter 2170 may contribute to securing isolation for the resonance in the second frequency band FB2. The filter 2170 may include a lumped element or a passive element, and may include, for example, an HPF.

A method of determining a feeding point based on a difference in electric field distribution between two modes and a null area of the electric field distribution may contribute to securing isolation between the resonances related to the two modes, such that the resonances related to the two modes do not substantially affect each other. In the example illustrated, dual feeds for one antenna radiator 2110 is presented, but the present disclosure is not limited thereto and multiple feeds may be implemented based on modes.

There may be a comparative example in which a single feed to one antenna radiator 2100 (e.g., a single antenna port) is formed. In the comparative example, for example, a diplexer for separating the first electromagnetic signal 2101 from the second electromagnetic signal 2102 and the third electromagnetic signal 2103, and another diplexer for separating the second electromagnetic signal 2102 from the third electromagnetic signal 2103, may be included. According to an embodiment, the dual feeding method of determining the first feeding point FP1 and the second feeding point FP2 based on mode 1, mode 2, and mode 3 may reduce the number of diplexers compared to the single feeding method of the comparative example, which may contribute to reducing circuit losses and costs.

According to various embodiments, although not illustrated, a frequency adjustment method may be further implemented in which, based on a difference in electric field distribution between two modes and a null area of the electric field distribution, a switching point corresponding to a switching circuit (e.g., the switching circuit 1510 in FIG. 15) is positioned in correspondence to a non-null area in one mode and positioned in correspondence to a null area in the other mode.

According to the example embodiment of the present disclosure, an electronic device (e.g., the electronic device 200 in FIG. 2) may include a housing (e.g., the housing 210 in FIG. 2). The housing may include a front surface plate (e.g., the front surface plate 201 in FIG. 2) that forms at least a portion of a front surface (e.g., the front surface 210A in FIG. 2) of the electronic device. The housing may include a rear surface plate (e.g., the rear surface plate 202 in FIG. 3) that forms at least a portion of a rear surface (e.g., the rear surface 210B in FIG. 3) of the electronic device. The housing may include a side member (e.g., the side member 203 in FIG. 2). The side member may surround at least partially a space between the front surface plate and the rear surface plate and form at least part of a side surface of the electronic device (e.g., the side surface 210C in FIG. 2). The electronic device may include a first support member (e.g., the first support member 410 in FIG. 4) positioned in an inner space of the housing. The first support member may be connected to the side member or extend from the side member. The electronic device may include a display (e.g., the display 301 in FIG. 4) positioned between the first support member and the front surface plate. The display may be visually exposed through the front surface. The electronic device may include a second support member (e.g., the second support member 420 in FIG. 7 or FIG. 8). The second support member may include a non-conductive structure (e.g., the non-conductive structure 71 in FIG. 7 or FIG. 8) and a conductive structure (e.g., the non-conductive structure 72 in FIG. 7 or FIG. 8) connected to the non-conductive structure (e.g., the non-conductive structure 71 in FIG. 7 or FIG. 8). The non-conductive structure may be positioned at least partially in a first space of a space between the first support member and the rear surface plate. The conductive structure may be positioned at least partially in a second space that does not overlap the first space of the space between the first support member and the rear surface plate when viewed from above the rear surface plate. The electronic device may include a printed circuit board (e.g., the second printed circuit board 451 in FIG. 4) positioned at least partially between the first support member and the second support member. The electronic device may include a wireless communication circuit (e.g., the communication circuit 1530 in FIG. 15, or the communication circuit 2130 in FIG. 21) constituted to transmit and/or receive a signal in a selected or designated frequency band through the conductive structure.

According to an example embodiment of the present disclosure, the first support member (e.g., the first support member 410 in FIG. 5) may include a conductive area (e.g., the conductive area 411 in FIG. 5) and a non-conductive area connected to the conductive area (e.g., the non-conductive area 412 in FIG. 5). The conductive structure (e.g., the conductive structure 72 in FIG. 7 or FIG. 8) may be coupled to the first support member using a screw. A conductive boss (e.g., the first screw fastening portion B1 in FIG. 10) that includes a female thread corresponding to the screw may be disposed in the non-conductive area. The conductive boss may be separate from the conductive area.

According to an example embodiment of the present disclosure, the second support member (e.g., the second support member 420 in FIG. 7 or FIG. 8) may include a screw hole (e.g., the first screw hole H1 in FIG. 10) formed in a portion in which the non-conductive structure (e.g., the non-conductive structure 71 in FIG. 10) and the conductive structure (e.g., the conductive structure 72 in FIG. 10) overlap in correspondence to the screw.

According to an example embodiment of the present disclosure, the electronic device may further include a flexible conductive member (e.g., the flexible conductive member 1210 in FIG. 12) positioned between the printed circuit board (e.g., the second printed circuit board 451 in FIG. 12) and the conductive structure (e.g., the conductive structure 72 in FIG. 12). The flexible conductive member may electrically connect the printed circuit board to the conductive structure. The conductive structure may be electrically connected with the wireless communication circuit (e.g., the communication circuit 1530 in FIG. 15, or the communication circuit 2130 in FIG. 21) through the flexible conductive member.

According to an example embodiment of the present disclosure, a first support member (e.g., the first support member 410 in FIG. 5) may include a conductive area (e.g., the conductive area 411 in FIG. 5) and a non-conductive area connected to the conductive area (e.g., the non-conductive area 412 in FIG. 5). A conductive structure (e.g., the conductive structure 72 in FIG. 7 or FIG. 8) may be coupled to the first support member using a screw. A conductive boss (e.g., the first screw fastening portion B1 in FIG. 10) that includes a female thread corresponding to the screw may be disposed in the non-conductive area. The conductive boss may be separate from the conductive area. The conductive structure may be electrically connected to a wireless communication circuit (e.g., the communication circuit 1530 in FIG. 15, or the communication circuit 2130 in FIG. 21) through a conductive member (e.g., the conductive member 1310 in FIG. 13) positioned between the conductive structure and a printed circuit board (e.g., the second printed circuit board 451 in FIG. 13) in correspondence to the screw.

According to an example embodiment of the present disclosure, a first support member (e.g., the first support member 410 in FIG. 5) may include a conductive area (e.g., the conductive area 411 in FIG. 5) and a non-conductive area connected to the conductive area (e.g., the non-conductive area 412 in FIG. 5). The conductive area may be electrically coupled to a ground plane included on a printed circuit board (e.g., the second printed circuit board 451 in FIG. 4). A conductive structure (e.g., the conductive structure 72 in FIG. 7 or FIG. 8) may be coupled to the first support member using a screw. The conductive area may include a conductive boss (e.g., the fourth screw fastening portion B4 in FIG. 5) that includes a female thread corresponding to the screw. The conductive structure may be electrically connected to the conductive area through a screw (e.g., the fourth screw S4 in FIG. 8).

According to an example embodiment of the present disclosure, the electronic device may include a first connector (e.g., the fourth connector 622 in FIG. 10) and a second connector (e.g., the sixth connector 626 in FIG. 10). The first connector and the second connector may be positioned between the printed circuit board and the conductive structure. The first connector and the second connector may be electrically connected. The first connector may be disposed on a printed circuit board (e.g., the second printed circuit board 451 in FIG. 10). The second connector may be positioned between the first connector and a conductive structure (e.g., the conductive structure 72 in FIG. 10). The conductive structure may be disposed to press the second connector toward the first connector.

According to an example embodiment of the present disclosure, the electronic device may further include an insulating member (e.g., the second insulating member 1010 in FIG. 10) positioned between a conductive structure (e.g., the conductive structure 72 in FIG. 10) and a second connector (e.g., the sixth connector 626 in FIG. 10).

According to an example embodiment of the present disclosure, the electronic device may further include another printed circuit board (e.g., the first printed circuit board 441 in FIG. 4) positioned between a first support member (e.g., the first support member 410 in FIG. 4) and a rear surface plate (e.g., the rear surface plate 202 in FIG. 4). The electronic device may further include a flexible printed circuit board (e.g., the second flexible printed circuit board 820 in FIG. 10) that electrically connects a second connector (e.g., the sixth connector 626 in FIG. 10) to another printed circuit board. The electronic device may further include a battery (e.g., the battery 460 in FIG. 4) positioned between the first support member and the rear surface plate. When viewed from above the rear surface plate, the battery may be positioned between the second support member and another printed circuit board. A wireless communication circuit (e.g., the communication circuit 1530 in FIG. 15, or the communication circuit 2130 in FIG. 21) may be disposed on another printed circuit board.

According to an example embodiment of the present disclosure, a conductive structure (e.g., the conductive structure 72 in FIG. 7) may be a structure capable of forming electric field distribution of mode 1 corresponding to a first natural frequency and electric field distribution of mode 2 corresponding to a second natural frequency. The conductive structure may include a first feeding point (e.g., the first feeding point FP1 in FIG. 20) and a second feeding point (e.g., the second feeding point FP2 in FIG. 20) to which a radiated current is provided from a wireless communication circuit (e.g., the communication circuit 2130 in FIG. 21). The first feeding point may be positioned in correspondence to an area of the electric field distribution of mode 1 that is not a null area, and may be positioned in correspondence to a null area of the electric field distribution of mode 2. The second feeding point may be positioned in correspondence to an area of the electric field distribution of mode 1 that is not a null area, and may be positioned in correspondence to an area of the electric field distribution of mode 2 that is not a null area.

According to an example embodiment of the present disclosure, a conductive structure (e.g., the conductive structure 72 in FIG. 7) may be a structure capable of forming electric field distribution of mode 1 corresponding to a first natural frequency, electric field distribution of mode 2 corresponding to a second natural frequency, and electric field distribution of mode 3 corresponding to a third natural frequency. The conductive structure may include a first feeding point (e.g., the first feeding point FP1 in FIG. 20) and a second feeding point (e.g., the second feeding point FP2 in FIG. 20) to which a radiated current from the wireless communication circuit is provided. The first feeding point may be positioned in correspondence to an area of the electric field distribution of mode 1 that is not a null area, positioned in correspondence to a null area of the electric field distribution of mode 2, and positioned in correspondence to an area of the electric field distribution of mode 3 that is not a null area. The second feeding point may be positioned in correspondence to an area of the electric field distribution of mode 1 that is not a null area, positioned in correspondence to an area of the electric field distribution of mode 2 that is not a null area, and positioned in correspondence to a null area of the electric field distribution of mode 3.

According to an example embodiment of the present disclosure, the electronic device may further include a diplexer (e.g., the diplexer 2150 in FIG. 21) disposed in a first transmission line electrically connecting a first feeding point (e.g., the first feeding point FP1 in FIG. 21) to a wireless communication circuit (e.g., the communication circuit 2130 in FIG. 21). The electronic device may further include a filter (e.g., the filter 2170 in FIG. 21) disposed in a second transmission line electrically connecting a second feeding point (e.g., the second feeding point FP2 in FIG. 21) and the wireless communication circuit. The filter may be constituted to select a frequency component of a specific band.

According to an example embodiment of the present disclosure, a conductive structure (e.g., the conductive structure 72 in FIG. 7) may be a structure capable of forming electric field distribution of mode 1 corresponding to a first natural frequency and electric field distribution of mode 2 corresponding to a second natural frequency. A switching circuit (e.g., the switching circuit 1510 in FIG. 15) may be further included to adjust a resonance of the conductive structure. A switching point (e.g., the switching point SP in FIG. 15) electrically connected to the switching circuit in the conductive structure may be positioned in correspondence to an area of the electric field distribution in mode 1 that is not a null area, and may be positioned in correspondence to a null area of the electric field distribution in mode 2.

According to example embodiments of the present disclosure, the electronic device may further include a processor (e.g., the processor 120 in FIG. 1). The processor may control the switching circuit to adjust an element value at which the switching circuit (e.g., the switching circuit 1510 in FIG. 15) acts according to a used frequency band.

According to an example embodiment of the present disclosure, the electronic device may further include a speaker (e.g., the first speaker 830 in FIG. 8) disposed in a non-conductive structure (e.g., the non-conductive structure 71 in FIG. 8) in correspondence to a speaker hole formed in the side member (e.g., the first speaker hole 3031 in FIG. 8).

According to the example embodiment of the present disclosure, an electronic device (e.g., the electronic device 200 in FIG. 2) may include a housing (e.g., the housing 210 in FIG. 2). The housing may include a front surface plate (e.g., the front surface plate 201 in FIG. 2) that forms at least a portion of a front surface (e.g., the front surface 210A in FIG. 2) of the electronic device. The housing may include a rear surface plate (e.g., the rear surface plate 202 in FIG. 3) that forms at least a portion of a rear surface (e.g., the rear surface 210B in FIG. 3) of the electronic device. The housing may include a side member (e.g., the side member 203 in FIG. 2). The side member may surround at least partially a space between the front surface plate and the rear surface plate and form at least part of a side surface of the electronic device (e.g., the side surface 210C in FIG. 2). The electronic device may include a first support member (e.g., the first support member 410 in FIG. 4) positioned in an inner space of the housing. The first support member may be connected to the side member or extend from the side member. The electronic device may include a display (e.g., the display 301 in FIG. 4) positioned between the first support member and the front surface plate. The display may be visually exposed through the front surface. The electronic device may include a second support member (e.g., the second support member 420 in FIG. 7 or FIG. 8). The second support member may include a non-conductive structure (e.g., the non-conductive structure 71 in FIG. 7 or FIG. 8) and a conductive structure (e.g., the non-conductive structure 72 in FIG. 7 or FIG. 8) connected to the non-conductive structure (e.g., the non-conductive structure 71 in FIG. 7 or FIG. 8). The non-conductive structure may be positioned at least partially in a first space of a space between the first support member and the rear surface plate. The conductive structure may be positioned at least partially in a second space that does not overlap the first space of the space between the first support member and the rear surface plate when viewed from above the rear surface plate. The electronic device may include a printed circuit board (e.g., the second printed circuit board 451 in FIG. 4) positioned at least partially between the first support member and the second support member. The electronic device may include a wireless communication circuit (e.g., the communication circuit 1530 in FIG. 15, or the communication circuit 2130 in FIG. 21) constituted to transmit and/or receive a signal in a selected or designated frequency band through the conductive structure. The first support member may include a conductive area (e.g., the conductive area 411 in FIG. 5) and a non-conductive area (e.g., the non-conductive area 412 in FIG. 5) connected to the conductive area. The conductive area may be electrically connected to a ground plane on the printed circuit board. The conductive structure may be coupled to the first support member using a screw. A conductive boss (e.g., the first screw fastening portion B1 in FIG. 10) that includes a female thread corresponding to the screw may be disposed in the non-conductive area. The conductive boss may be separate from the conductive area.

According to an example embodiment of the present disclosure, the electronic device may further include a flexible conductive member (e.g., the flexible conductive member 1210 in FIG. 12) positioned between the printed circuit board (e.g., the second printed circuit board 451 in FIG. 12) and the conductive structure (e.g., the conductive structure 72 in FIG. 12). The flexible conductive member may electrically connect the printed circuit board to the conductive structure. The conductive structure may be electrically connected with the wireless communication circuit (e.g., the communication circuit 1530 in FIG. 15, or the communication circuit 2130 in FIG. 21) through the flexible conductive member.

According to an example embodiment of the present disclosure, a conductive structure (e.g., the conductive structure 72 in FIG. 7) may be a structure capable of forming electric field distribution of mode 1 corresponding to a first natural frequency, electric field distribution of mode 2 corresponding to a second natural frequency, and electric field distribution of mode 3 corresponding to a third natural frequency. The conductive structure may include a first feeding point (e.g., the first feeding point FP1 in FIG. 20) and a second feeding point (e.g., the second feeding point FP2 in FIG. 20) to which a radiated current from the wireless communication circuit is provided. The first feeding point may be positioned in correspondence to an area of the electric field distribution of mode 1 that is not a null area, positioned in correspondence to a null area of the electric field distribution of mode 2, and positioned in correspondence to an area of the electric field distribution of mode 3 that is not a null area. The second feeding point may be positioned in correspondence to an area of the electric field distribution of mode 1 that is not a null area, positioned in correspondence to an area of the electric field distribution of mode 2 that is not a null area, and positioned in correspondence to a null area of the electric field distribution of mode 3.

According to an example embodiment of the present disclosure, the electronic device may further include a diplexer (e.g., the diplexer 2150 in FIG. 21) disposed in a first transmission line electrically connecting a first feeding point (e.g., the first feeding point FP1 in FIG. 21) to a wireless communication circuit (e.g., the communication circuit 2130 in FIG. 21). The electronic device may further include a filter (e.g., the filter 2170 in FIG. 21) disposed in a second transmission line electrically connecting a second feeding point (e.g., the second feeding point FP2 in FIG. 21) and the wireless communication circuit. The filter may be constituted to select a frequency component of a specific band.

According to an example embodiment of the present disclosure, a conductive structure (e.g., the conductive structure 72 in FIG. 7) may be a structure capable of forming electric field distribution of mode 1 corresponding to a first natural frequency and electric field distribution of mode 2 corresponding to a second natural frequency. A switching circuit (e.g., the switching circuit 1510 in FIG. 15) may be further included to adjust a resonance of the conductive structure. A switching point (e.g., the switching point SP in FIG. 15) electrically connected to the switching circuit in the conductive structure may be positioned in correspondence to an area of the electric field distribution in mode 1 that is not a null area, and may be positioned in correspondence to a null area of the electric field distribution in mode 2.

The embodiments disclosed in the present disclosure and the drawings are provided as particular examples for easily explaining the technical contents and helping understand the embodiment, but not intended to limit the scope of the embodiment. Accordingly, the scope of the various embodiments of the present disclosure should be interpreted as including alterations or modifications in addition to the disclosed embodiments.

## Claims

1. An electronic device comprising:
a housing including a front surface plate configured to form at least partially a front surface of the electronic device, a rear surface plate configured to form at least partially a rear surface of the electronic device, and a side member surrounding at least partially a space between the front surface plate and the rear surface plate and configured to form at least partially a side surface of the electronic device;
a first support member positioned in an inner space of the housing, and connected to the side member or extending from the side member;
a display positioned between the first support member and the front surface plate, and visually exposed through the front surface;
a second support member including a non-conductive structure positioned at least partially in a first space of a space between the first support member and the rear surface plate, and a conductive structure positioned at least partially in a second space of the space between the first support member and the rear surface plate, which does not overlap the first space when viewed from above the rear surface plate, and connected to the non-conductive structure;
a printed circuit board positioned at least partially between the first support member and the second support member; and
a wireless communication circuit configured to transmit and/or receive a signal in a selected or designated frequency band through the conductive structure.

2. The electronic device of claim 1, wherein the first support member includes a conductive area and a non-conductive area connected to the conductive area,
wherein the conductive structure is coupled to the first support member using a screw,
wherein a conductive boss including a female thread is disposed in the non-conductive area in correspondence to the screw, and
wherein the conductive boss is separate from the conductive area.

3. The electronic device of claim 2, wherein the second support member includes a screw hole formed in a portion in which the non-conductive structure and the conductive structure overlap in correspondence to the screw.

4. The electronic device of claim 1, further comprising:
a flexible conductive member positioned between the printed circuit board and the conductive structure, electrically connecting the printed circuit board and the conductive structure,
wherein the conductive structure is electrically connected to the wireless communication circuit through the flexible conductive member.

5. The electronic device of claim 1, wherein the first support member includes a conductive area and a non-conductive area connected to the conductive area,
wherein the conductive structure is coupled to the first support member using a screw,
wherein a conductive boss including a female thread is disposed in the non-conductive area in correspondence to the screw,
wherein the conductive boss is separate from the conductive area, and
wherein the conductive structure is electrically connected to the wireless communication circuit through a conductive member positioned between the conductive structure and the printed circuit board in correspondence to the screw.

6. The electronic device of claim 1, wherein the first support member includes a conductive area electrically connected to a ground plane included in the printed circuit board, and a non-conductive area connected to the conductive area,
wherein the conductive structure is coupled to the first support member using a screw,
wherein the conductive area includes a conductive boss that includes a female thread in correspondence to the screw, and
wherein the conductive structure is electrically connected to the conductive area through the screw.

7. The electronic device of claim 1, further comprising:
a first connector and a second connector positioned between the printed circuit board and the conductive structure and electrically connected to each other,
wherein the first connector is disposed on the printed circuit board, the second connector is positioned between the first connector and the conductive structure, and the conductive structure is disposed to press the second connector toward the first connector.

8. The electronic device of claim 7, further comprising:
an insulating member positioned between the conductive structure and the second connector.

9. The electronic device of claim 7, further comprising:
another printed circuit board positioned between the first support member and the rear surface plate;
a flexible printed circuit board electrically connecting the second connector and the other printed circuit board; and
a battery positioned between the first support member and the rear surface plate,
wherein, when viewed from above the rear surface plate, the battery is positioned between the second support member and the other printed circuit board, and the wireless communication circuit is disposed on the other printed circuit board.

10. The electronic device of claim 1, wherein the conductive structure is a structure that is capable of forming electric field distribution of mode 1 corresponding to a first natural frequency and electric field distribution of mode 2 corresponding to a second natural frequency,
wherein the conductive structure includes a first feeding point and a second feeding point to which a radiated current is provided from the wireless communication circuit,
wherein the first feeding point is positioned in correspondence to an area of the electric field distribution of the mode 1 that is not a null area, and positioned in correspondence to a null area of the electric field distribution of the mode 2, and
wherein the second feeding point is positioned in correspondence to an area of the electric field distribution of the mode 1 that is not a null area, and positioned in correspondence to an area of the electric field distribution of the mode 2 that is not a null area.

11. The electronic device of claim 1, wherein the conductive structure is a structure that is capable of forming electric field distribution of mode 1 corresponding to a first natural frequency, electric field distribution of mode 2 corresponding to a second natural frequency, and electric field distribution of mode 3 corresponding to a third natural frequency,
wherein the conductive structure includes a first feeding point and a second feeding point to which a radiated current is provided from the wireless communication circuit,
wherein the first feeding point is positioned in correspondence to an area of the electric field distribution of the mode 1 that is not a null area, positioned in correspondence to a null area of the electric field distribution of the mode 2, and positioned in correspondence to an area of the electric field distribution of the mode 3 that is not a null area, and
wherein the second feeding point is positioned in correspondence to an area of the electric field distribution of the mode 1 that is not a null area, positioned in correspondence to an area of the electric field distribution of the mode 2 that is not a null area, and positioned in correspondence to a null area of the electric field distribution of the mode 3.

12. The electronic device of claim 11, further comprising:
a diplexer disposed in a first transmission line electrically connecting the first feeding point to the wireless communication circuit; and
a filter disposed in a second transmission line electrically connecting the second feeding point to the wireless communication circuit and constituted to select a frequency component of a specific band.

13. The electronic device of claim 1, wherein the conductive structure is a structure that is capable of forming electric field distribution of mode 1 corresponding to a first natural frequency and electric field distribution of mode 2 corresponding to a second natural frequency, and further includes a switching circuit configured to adjust a resonance of the conductive structure,
wherein a switching point of the conductive structure electrically connected to the switching circuit is positioned in correspondence to an area of the electric field distribution of the mode 1 that is not a null area, and positioned in correspondence to a null area of the electric field distribution of the mode 2.

14. The electronic device of claim 1, further comprising:
a processor configured to control the switching circuit to adjust an element value at which the switching circuit acts according to a used frequency band.

15. The electronic device of claim 1, further comprising:
a speaker disposed in the non-conductive structure in correspondence to a speaker hole formed in the side member.
